# EUROPEAN PATENT APPLICATION

(11) **EP 4 715 568 A1**
(43) Date of publication of application: **25.03.2026**
(21) Application number: 25818120.5
(22) Date of filing: 04.07.2025
(51) Int. Cl.: G06F 3/16, G10L 13/08, G10L 15/26, G06F 40/58, G10L 21/043, G06V 30/14

(54) **ELECTRONIC DEVICE, METHOD, AND NON-TRANSITORY COMPUTER-READABLE STORAGE MEDIUM FOR OUTPUTTING SPEECH DATA**

(30) Priority: 05.07.2024 KR 20240088717; 06.09.2024 KR 20240121940
(71) Applicant: Samsung Electronics Co., Ltd., Suwon-si, Gyeonggi-do 16677 (KR)
(72) Inventor: KIM, Kwanghoon, Suwon-si, Gyeonggi-do 16677 (KR); CHO, Hongil, Suwon-si, Gyeonggi-do 16677 (KR); HWANG, Inchul, Suwon-si, Gyeonggi-do 16677 (KR); HWANG, Yoonchoon, Suwon-si, Gyeonggi-do 16677 (KR); HWANG, Gwangho, Suwon-si, Gyeonggi-do 16677 (KR); JHO, Gunu, Suwon-si, Gyeonggi-do 16677 (KR); LEE, Jeasung, Suwon-si, Gyeonggi-do 16677 (KR); OH, Junkwang, Suwon-si, Gyeonggi-do 16677 (KR); BAE, Sora, Suwon-si, Gyeonggi-do 16677 (KR); KIM, Miyoung, Suwon-si, Gyeonggi-do 16677 (KR); KIL, Hongjun, Suwon-si, Gyeonggi-do 16677 (KR)
(74) Representative: HGF
(86) International application number: PCT/KR2025/009649
(87) International publication number: WO 2026/010442

(57) **Abstract**

In embodiments, an electronic device is provided. The electronic device includes at least one processor comprising processing circuitry and, memory storing instructions, and, the instructions, when executed by the at least one processor individually or collectively, causes the electronic device to generate first text data for first voice data, generate second text data corresponding to the first text data, through a translation from a first language of the first text data to a second language, determine a voice output speed for the second text data based on amount of text data waiting for text-to-speech conversion, generate second voice data for the second text data by performing the text-to-speech conversion based on the voice output speed, and output the second voice data.

## Description

### [Technical Field]

The following descriptions relate to an electronic device, a method, and a non-transitory computer-readable storage medium for outputting voice data.

### [Background Art]

An electronic device may convert voice signals into text. The electronic device may convert text into voice signals. After translating text of a first language into text of a second language, the electronic device may provide the translated text of the second language to a user.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

In embodiments, an electronic device is provided. The electronic device may comprise at least one processor comprising processing circuitry and, memory storing instructions, and, the instructions, when executed by the at least one processor individually or collectively, may cause the electronic device to generate first text data for first voice data, generate second text data corresponding to the first text data, through a translation from a first language of the first text data to a second language, determine a voice output speed for the second text data based on amount of text data waiting for text-to-speech conversion, generate second voice data for the second text data by performing the text-to-speech conversion based on the voice output speed, and output the second voice data.

In embodiments, a method performed by an electronic device is provided. The method may comprise generating first text data for first voice data, generating second text data corresponding to the first text data, through a translation from a first language of the first text data to a second language, determining a voice output speed for the second text data based on amount of text data waiting for text-to-speech conversion, generating second voice data for the second text data by performing the text-to-speech conversion based on the voice output speed, and outputting the second voice data.

In embodiments, an electronic device is provided. The electronic device may comprise at least one processor comprising processing circuitry, and memory storing instructions. The instructions, when executed by the at least one processor individually or collectively, may cause the electronic device to generate first text data for first voice data, generate second text data corresponding to the first text data, through a translation from a first language of the first text data to a second language, determine a voice output speed for the second text data based on a speech time of the first voice data and a speech speed corresponding to a text length of the first text data, generate second voice data for the second text data by performing the text-to-speech conversion based on the voice output speed, and, output the second voice data.

In embodiments, a method performed by an electronic device is provided. The electronic device may comprise generating first text data for first voice data, generating second text data corresponding to the first text data, through a translation from a first language of the first text data to a second language, determining a voice output speed for the second text data based on a speech time of the first voice data and a speech speed corresponding to a text length of the first text data, generating second voice data for the second text data by performing the text-to-speech conversion based on the voice output speed, and outputting the second voice data.

In embodiments, an electronic device is provided. The electronic device comprises: at least one processor comprising processing circuitry; memory storing instructions that, when executed by the at least one processor individually or collectively, cause the electronic device to: generate first text data based on first voice data; generate second text data corresponding to the first text data, through a translation from a first language of the first text data to a second language; determine a voice output speed for the second text data based on an amount of text data waiting for text-to-speech conversion; generate second voice data for the second text data by performing the text-to-speech conversion; and output the second voice data; wherein at least one of generating the second voice data by performing the text-to-speech conversion or outputting the second voice data is based on the determined voice output speed.

In embodiments, a method performed by an electronic device is provided, the method comprising: generating first text data based on first voice data; generating second text data corresponding to the first text data, through a translation from a first language of the first text data to a second language; determining a voice output speed for the second text data based on an amount of text data waiting for text-to-speech conversion; generating second voice data for the second text data by performing the text-to-speech conversion; and outputting the second voice data; wherein at least one of generating the second voice data by performing the text-to-speech conversion or outputting the second voice data is based on the determined voice output speed.

In embodiments, a non-transitory computer-readable storage medium is provided. The non-transitory computer-readable storage medium may cause an electronic device to generate first text data for first voice data, generate second text data corresponding to the first text data, through a translation from a first language of the first text data to a second language, determine a voice output speed for the second text data based on amount of text data waiting for text-to-speech conversion, generate second voice data for the second text data by performing the text-to-speech conversion based on the voice output speed, and output the second voice data.

In embodiments, a non-transitory computer-readable storage medium is provided. The non-transitory computer-readable storage medium may cause an electronic device to generate first text data for first voice data, generate second text data corresponding to the first text data, through a translation from a first language of the first text data to a second language, determine a voice output speed for the second text data based on a speech time of the first voice data and a speech speed corresponding to a text length of the first text data, generate second voice data for the second text data by performing the text-to-speech conversion based on the voice output speed, and output the second voice data.

In embodiments, a non-transitory computer-readable storage medium is provided. The non-transitory computer-readable storage medium may cause an electronic device to generate first text data based on first voice data; generate second text data corresponding to the first text data, through a translation from a first language of the first text data to a second language; determine a voice output speed for the second text data based on an amount of text data waiting for text-to-speech conversion; generate second voice data for the second text data by performing the text-to-speech conversion; and output the second voice data; wherein at least one of generating the second voice data by performing the text-to-speech conversion and outputting the second voice data is based on the determined voice output speed.

### [Description of the Drawings]

In relation to a description of a drawing, the same or a similar reference numeral may be used for the same or a similar component.
FIG. 1 is a block diagram of an electronic device in a network environment according to various embodiments.
FIG. 2A illustrates an example of speech language conversion for converting a voice of a first language into a voice of a second language according to various embodiments.
FIG. 2B illustrates components of an electronic device for speech language conversion according to various embodiments.
FIG. 3 illustrates an example of a buffer for text-to-speech conversion according to various embodiments.
FIG. 4 illustrates an example of speech language conversion performed based on an adaptive voice output speed according to various embodiments.
FIG. 5 illustrates components of a text-to-speech conversion portion for controlling a voice output speed according to various embodiments.
FIG. 6 illustrates an operation flow of an electronic device for performing speech language conversion based on an adaptive voice output speed according to various embodiments.
FIG. 7 illustrates an operation flow of an electronic device for adjusting a voice output speed according to a speech speed according to various embodiments.
FIGS. 8A to 8C illustrate examples of speech language conversion according to various embodiments.
FIG. 9 illustrates functional components of an electronic device using a speech language conversion function according to various embodiments.
FIG. 10 illustrates an example of a screen of a conversation mode in an application for speech language conversion according to various embodiments.
FIGS. 11A and 11B illustrate an example of a user interface entering a listening mode in an application for speech language conversion according to various embodiments.
FIG. 12 illustrates an example of a screen of a listening mode of an application for speech language conversion according to various embodiments.
FIG. 13A illustrates an example of a screen of a conversation mode of an application for speech language conversion in a foldable type electronic device according to various embodiments.
FIG. 13B illustrates an example of a screen of a listening mode of an application for speech language conversion in a foldable type electronic device according to various embodiments.
FIG. 14 illustrates an example of a screen of a listening mode of an application for speech language conversion in a foldable type electronic device according to various embodiments.
FIG. 15 illustrates an example of a screen of a function for speech language conversion during a call according to various embodiments.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to signals (e.g., signals, information, a message, signaling), a term referring to a component performing a function (e.g., a code, a function, an instruction, a module, a unit, a circuit, a program, a command), a term referring to a data type (e.g., data, a data segment, a data part, a data set), a term for an computation state (e.g., a step, an operation, a procedure), a term referring to data (e.g., a packet, a user stream, information, a bit, a symbol, a codeword), and the like, used in the following description are exemplified for convenience of explanation. Therefore, the present disclosure is not limited to terms described below, and other terms having equivalent technical meanings may be used. In addition, terms '...unit,' '...device,' '...object,' and '...structure', and the like, used below may mean at least one shape structure or a unit that processes a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' refer to including at least one of 'C' or 'D', that is, {'C', 'D', and 'C' and 'D'}.

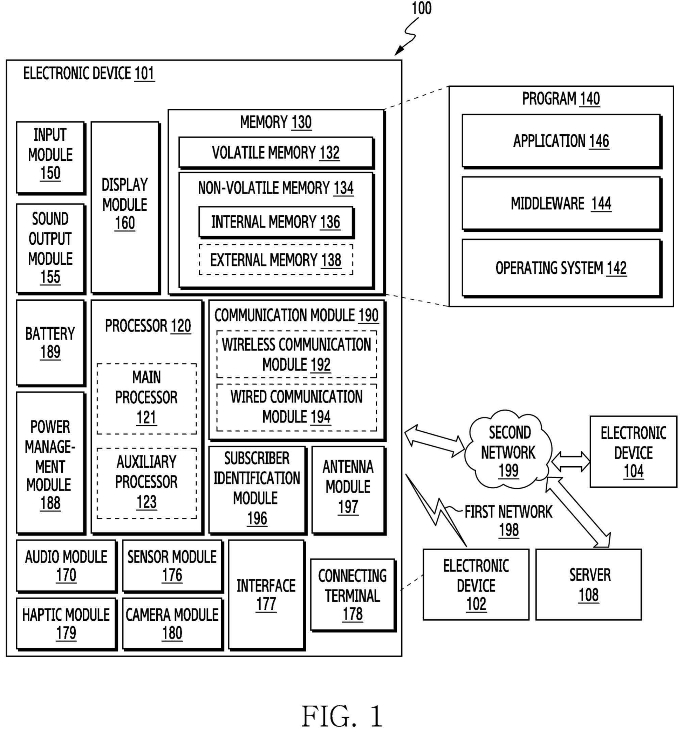

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

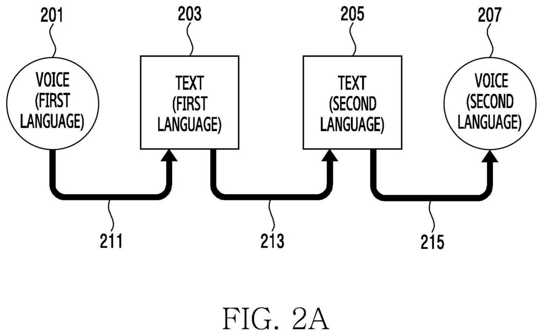

FIG. 2A illustrates an example of speech language conversion for converting a voice of a first language into a voice of a second language according to various embodiments. An electronic device 101 may provide a service for converting (hereinafter, the speech language conversion) (e.g., interpretation) the voice of the first language into the voice of the second language. For example, the electronic device 101 may execute an application for the speech language conversion. For example, the electronic device 101 may execute a function for the speech language conversion while executing another application.

Referring to FIG. 2A, speech language conversion may indicate converting voice signals 201 of the first language (e.g., English) into voice signals 207 of the second language (e.g., Korean). The speech language conversion may include speech-to-text conversion 211, a translation 213, and text-to-speech conversion 215. The electronic device 101 may perform the speech-to-text conversion 211. The electronic device 101 may obtain the voice signals 201 of the first language (e.g., English). The electronic device 101 may perform the speech-to-text conversion 211 for the voice signals 201 of the first language. The speech-to-text conversion 211 may indicate converting at least a portion of the voice signals 201 into text. Both the voice signals and the text may correspond to the first language (e.g., English). A unit in which (or on which) the speech-to-text conversion 211 is performed may be referred to as a voice unit. For example, the voice unit may be a syllable or a word. Voice data of voice signals may include a plurality of voice units. For example, the voice unit may include a voice signals section divided based on a silence section (e.g., a pause, a short pause, a long pause, a section where no voice exists, and a section where only background noise exists). In this case, the voice signals section may be determined through end-point detection (EPD). The electronic device 101 may generate text 203 of the first language through the speech-to-text conversion 211 for the voice signals 201. The text 203 of the first language may include a text unit corresponding to each voice unit. For example, the text 203 of the first language may include a plurality of text units. For a non-limiting example, each voice unit may correspond to the plurality of text units. The electronic device 101 may generate the text units of the first language through the speech-to-text conversion 211 for the voice signals 201. As an example, the electronic device 101 may generate the text 203 of the first language through a speech-to-text conversion module (e.g., an automatic speech recognition (ASR) module). An output unit of the speech-to-text conversion module may be the text unit. For a non-limiting example, a unit of voice signals input from the ASR module may be different from a text unit output from the ASR module. The number of text units output from the ASR module may be different from the number of voice units processed by the ASR module. As an example, a different processing unit and a different output unit may be identified through continuous updates of a recognized result in streaming ASR.

The electronic device 101 may perform the translation 213. The electronic device 101 may perform the translation 213 for (or on) the text 203 of the first language. The translation 213 may indicate (or comprise) converting text of the first language (e.g., English) into text of the second language (e.g., Korean). The text 203 of the first language may include the plurality of text units. For example, each text unit may correspond to a voice unit that is the output unit of the speech-to-text conversion 211. The electronic device 101 may sequentially perform the translation 213 on each of the text units. The electronic device 101 may generate the text 205 of the second language through the translation 213 for the text 203 of the first language. For example, instead of performing the translation 213 for each divided letters or words, the electronic device 101 may collect the letters and/or the words and then perform the translation 213 in a sentence unit or a paragraph unit. An output unit of the translation 213 may be larger than an output unit of the speech-to-text conversion 211. For example, the output unit of the translation 213 may be a sentence unit, and the output unit (or an input unit of the translation 213) of the speech-to-text conversion 211 may be a word segment unit. The output unit of the translation 213 may be understood as one text data. The electronic device 101 may generate text data of the second language through the translation 213. The text data may correspond to the text 205 of the second language. As an example, the electronic device 101 may obtain the text 205 of the second language corresponding to the text 203 of the first language through a translation module (e.g., a machine translator (MT) module). An output unit (e.g., a sentence, a paragraph) of the MT module may be different from an input unit (e.g., a letter, a word, a word segment) of the MT module.

The electronic device 101 may perform the text-to-speech conversion 215. The electronic device 101 may perform the text-to-speech conversion 215 for the text 205 of the second language. The text-to-speech conversion 215 may indicate converting text data into voice data. The text data may correspond to the output unit of the translation 213. The text data may be a unit of a request of the text-to-speech conversion 215. The electronic device 101 may perform text-to-speech conversion for each text data. In other words, a unit in which the text-to-speech conversion 215 is performed may be the text data. Both language of the voice data and language of the text data may correspond to the second language (e.g., Korean). The electronic device 101 may generate voice data of the second language (e.g., Korean). The voice data may be generated through the text-to-speech conversion 215 for each request of the text-to-speech conversion 215. The electronic device 101 may obtain the voice data of the second language through the text-to-speech conversion 215. The generated voice data may be output as voice signals 207 of the second language. As an example, the electronic device 101 may obtain the voice signals 207 of the second language through a text-to-speech module (e.g., a text-to-speech (TTS) module). The electronic device 101 may output the voice signals 207 of the second language. For a non-limiting example, at least one of generating the voice data of the second language or outputting the voice signals 207 of the second language may be performed based on a voice output speed, wherein the voice output speed is determined based on an amount of text data of the second language waiting for the text-to-speech conversion 215.

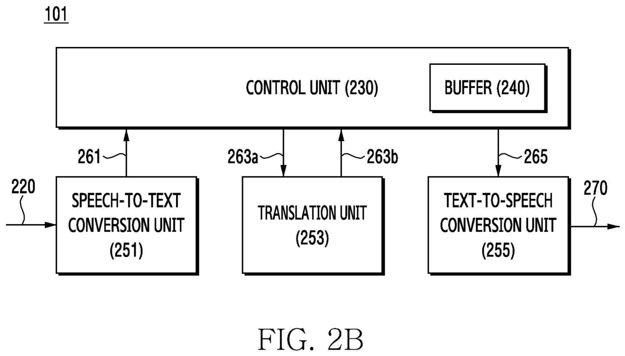

FIG. 2B illustrates components of an electronic device (e.g., the electronic device 101) for speech language conversion. In FIG. 2B, components according to an application for the speech language conversion are described, but these components are only an example and are not interpreted as limiting embodiments of the present disclosure. The electronic device illustrated in FIG. 2B may execute the speech language conversion (or aspects thereof) described above in relation to FIG. 2A.

Referring to FIG. 2B, the electronic device 101 (e.g., a processor 120) may execute an application for the speech language conversion or a function for the speech language conversion. For example, the electronic device 101 may execute a translation application. The function for the speech language conversion may be included in the translation application. For example, the electronic device 101 may execute the function for the speech language conversion while another application (e.g., a call application) is executing. The electronic device 101 may include the application for the speech language conversion or a control unit 230 (e.g., the processor 120) for controlling the function of the speech language conversion. The control unit 230 may be a component (e.g., a module, a program, a code, and instructions) for controlling a speech-to-text conversion unit 251, a translation unit 253, and/or a text-to-speech conversion unit 255. For example, the control unit 230 may be understood as an operation of a processor (e.g., the processor 120) for executing codes of the program for the speech language conversion or codes of a function of the program.

The electronic device 101 may include the speech-to-text conversion unit 251. The speech-to-text conversion unit 251 may be a unit (a module, a function code, a separate device, a circuit, or a set of instructions) configured to perform conversion (e.g., the speech-to-text conversion 211) from speech to text in the electronic device 101. For example, the speech-to-text conversion unit 251 may be configured to generate first text data based on first voice data. For example, the speech-to-text conversion unit 251 may include the ASR module. The speech-to-text conversion unit 251 may obtain voice signals 220. The speech-to-text conversion unit 251 may include (or perform speech-to-text conversion on) a plurality of voice units corresponding to voice data of the voice signals 220. The voice signals 220 may be divided into the plurality of voice units. The speech-to-text conversion unit 251 may divide input voice signals 220 into a designated unit (e.g., a syllable, a word segment, a word, and a sentence). For example, the voice unit may include a voice signals section divided based on a silence section (e.g., a pause, a short pause, a long pause, no voice, and only background noise). In this case, the voice signals section may be determined through an end-point detection (EPD). The unit may be referred to as the voice unit. The speech-to-text conversion unit 251 may generate a text unit corresponding to the voice unit of a divided unit. The text unit may correspond to the first language (e.g., English). The speech-to-text conversion unit 251 may provide a text unit 261 to the control unit 230. For example, the voice signals 220 of " Hello, I am going to visit your office this afternoon" may be input. If the speech-to-text conversion unit 251 partitions the voice signals 220 into a unit of the divided voice unit through the EPD, the speech-to-text conversion unit 251 may convert the partitioned voice unit into a text unit. As an example, the speech-to-text conversion unit 251 may generate a text unit corresponding to each of 'Hello', 'I am', 'going to', 'visit', 'your', 'office', 'this', and 'afternoon'. The speech-to-text conversion unit 251 may output the generated the text units 261 to the control unit 230.

The electronic device 101 may include the translation unit 253. The translation unit 253 may be a unit (a module, a function code, a separate device, a circuit, or a set of instructions) configured to perform a translation (e.g., the translation 213) in the electronic device 101. For example, the translation unit 253 may be configured to generate second text data corresponding to the first text data, through a translation from a first language of the first text data to a second language. For example, the translation unit 253 may include the MT module. The electronic device 101 may generate second text data 263b through the translation for first text data 263a. The translation unit 253 may obtain the first text data 263a. The first text data 263a may include a plurality of text units (e.g., the text units 261). The plurality of text units may be composed in the first language. The translation unit 253 may generate the second text data 263b corresponding to the plurality of text units of the first text data 263a. The second text data 263b may be composed in the second language. The translation unit 253 may provide the second text data 263b to the control unit 230. Instead of performing the translation 213 for each of divided letters or words, the translation unit 253 may collect the letters and/or the words and then perform the translation 213 in a sentence unit or a paragraph unit. An output unit (e.g., a sentence, a paragraph) of the translation unit 253 may be the same as or different from an input unit (e.g., a letter, a word) of the translation unit 253. For example, text units corresponding to 'Hello', 'I am' 'going to' 'visit' 'your' 'office', 'this', 'afternoon' may be input into the translation unit 253 as the first text data 263a. The translation unit 253 may generate " 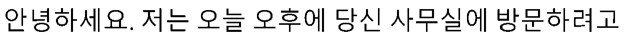 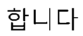 " as the second text data 263b. The translation unit 253 may provide the text data 263b to the control unit 230.

The input unit (e.g., each text unit of the first text data 263a) of the translation unit 253 may be the same as an output unit (e.g., each text unit of the text units 261) of the speech-to-text conversion unit 251. As an example, the control unit 230 may directly provide the text unit received from the speech-to-text conversion unit 251 to the translation unit 253. For a non-limiting example, the input unit of the translation unit 253 may be different from the output unit of the speech-to-text conversion unit 251. The control unit 230 may provide two or more text units together, received from the speech-to-text conversion unit 251 to the translation unit 253. The output unit (or a translation unit) (e.g., the second text data 263b) of the translation unit 253 may be different from the output unit of the speech-to-text conversion unit 251. As an example, the translation unit 253 may be configured to perform the translation 213 by collecting the input text units. The translation unit 253 may output text data 263b having the second language through the translation 213.

After obtaining the text data 263b from the translation unit 253, the control unit 230 may store the text data 263b in a buffer 240 for the text-to-speech conversion. In general, since a text speed input to the text-to-speech conversion unit 255 is faster than the output speed from the text-to-speech conversion unit 255 (or faster than the output speed of the result of the text-to-speech conversion unit, e.g. audio output of the second voice data), buffering of text may be required. The buffer 240 may be a space in which text data waiting for text-to-speech conversion is stored. The buffer 240 may be referred to in a text queue, a text data queue, a TTS queue, a conversion waiting queue, a speech conversion waiting queue, a text buffer, a text data buffer, a TTS buffer, a conversion waiting buffer, a speech conversion waiting buffer, text queue (or waiting line), TTS queue, conversion queue, speech conversion queue, and/or equivalent technical terms. For example, the buffer 240 may correspond to a first input first output (FIFO) type.

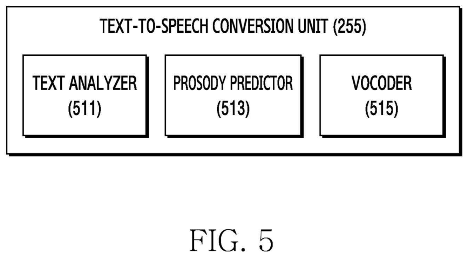

The electronic device 101 may include the text-to-speech conversion unit 255. The text-to-speech conversion unit 255 may be a unit (a module, a function code, a separate device, a circuit, or a set of instructions) configured to perform conversion (e.g., the text-to-speech conversion 215) from text to speech in the electronic device 101. For example, the text-to-speech conversion unit 255 may be configured to generate second voice data for the second text data by performing text-to-speech conversion. For example, the text-to-speech conversion unit 255 may include the TTS module. The text-to-speech conversion unit 255 may obtain input text data. The text-to-speech conversion unit 255 may obtain text data from the buffer 240 for text-to-speech conversion. The text-to-speech conversion unit 255 may generate voice data corresponding to the text data. The text-to-speech conversion unit 255 may output the voice data. The text-to-speech conversion unit 255 may output voice signals 270 including voice data. Specifically, the text-to-speech conversion unit 255 may generate a sequence of synthesis units through analysis of the text data. The sequence may be a set of the synthesis units. The synthesis unit may be a unit forming a sound. The text-to-speech conversion unit 255 may generate prosody information for each synthesis unit (e.g., a frame, a set unit of data samples in a constant time interval, in signal processing), a phoneme, a syllable, a letter, a word) of the sequence. The prosody information may indicate information for reflecting a voice characteristic such as rhythm, an accent, stress, and a speed in a designated synthesis unit. The text-to-speech conversion unit 255 may generate a synthesis sound corresponding to a plurality of synthesis units based on the prosody information. The text-to-speech conversion unit 255 may be configured to output the synthesis sound. As an example, the text-to-speech conversion unit 255 may generate a waveform corresponding to the synthesis sound. The synthesis sound may correspond to the voice signals 270. The text-to-speech conversion unit 255 is described in detail through FIG. 5.

A process of speech language conversion includes conversion from speech to text, a translation, and conversion from text to speech. As a size of data requiring conversion is larger, delay time may occur. Due to this delay time, a real-time performance of a service of the speech language conversion may deteriorate. For example, assume a situation in which there are a plurality of sentences that need to be translated, in a live translation service, such as an oration and a sermon. The electronic device 101 may output a voice of the second language (e.g., Korean) corresponding to a content much earlier than a content of a voice of the first language (e.g., English) that a user currently hears through an utterer. For example, there may be a significant delay between the time at which a portion of speech in the first language is received by the electronic device 101 and the time at which the corresponding translated speech in the second language is output to the user of the electronic device (or output to the user of an external device connected to the electronic device). For this reason, the user of the electronic device 101 (and/or the external electronic device) may feel discomfort. Furthermore, if the speech in the first language is received more rapidly than the speech in the second language is output, a buffer (e.g. buffer 240) storing text data for text-to-speech conversion may become full or begin to consume a large amount of memory, which may impact performance of the translation and/or the overall operation of the electronic device 101. In embodiments of the present disclosure, a technique for adjusting a voice output speed to prevent or alleviate the discomfort (and/or buffer issues) is proposed to decrease this problem. For example, the electronic device 101 may adjust the voice output speed according to a length of the content that the user of the electronic device 101 is listening to. For example, the voice output speed may be adjusted according to a difference between the content that the user of the electronic device 101 is listening to and a content that the electronic device 101 is outputting through the text-to-speech conversion portion 255. Text data waiting in a buffer (e.g., the buffer 240) for the text-to-speech conversion may be used to determine the length of the content that the user is listening to or the difference. When a voice of the utterer is over, a real-time experience of the user may be improved by controlling the voice output speed so that a voice output through the electronic device 101 also ends at a similar time (e.g., an end time point is within a threshold range). In addition to a voice output speed, the voice output speed, which is a control element according to embodiments of the present disclosure, may be referred to as a sound source play speed, a speech-to-text conversion output speed, a translation sound source play speed, a translation play speed, a conversion voice speed, a conversion speech speed, a conversion play speed, a conversion sound source speed, a synthesis sound speed, a TTS output speed, a TTS synthesis speed, a TTS synthesis sound speed, a TTS play speed, a TTS voice speed, and/or an equivalent technical term. The TTS synthesis sound speed getting faster may mean that an entire length of the TTS synthesis sound is shorter. As the TTS synthesis sound speed gets faster, the entire length of the TTS synthesis sound may be shorter.

The control unit 230 according to embodiments of the present disclosure may determine a voice output speed for the second text data based on an amount of text data waiting for text-to-speech conversion. The control unit 230 according to embodiments of the present disclosure may identify text data pending in the buffer 240 for text-to-speech conversion. The buffer 240 for the text-to-speech conversion may store the text data waiting for conversion (hereinafter, the text-to-speech conversion) from text to speech. The control unit 230 may determine amount of the text data pending in the buffer 240 for the text-to-speech conversion. According to an embodiment, the control portion 230 may determine the number of requests for the text-to-speech conversion. The text data input to the buffer 240 for the text-to-speech conversion may be understood as a request for the text-to-speech conversion. For example, in case that the number of the text data input to the buffer 240 is three, the number of requests for the text-to-speech conversion may be three. According to an embodiment, the control unit 230 may determine a text length waiting for the text-to-speech conversion. For example, the text length may indicate the number of letters included in the text. The control unit 230 may determine the number of letters included in the text data stored in the buffer 240 for the text-to-speech conversion. The text length may be represented in various ways in addition to the number of letters. For example, the text length may correspond to the number of letters. For example, the text length may correspond to the number of syllables. For example, the text length may correspond to the number of word segments. For example, the text length may correspond to the number of words. The control unit 230 may determine a voice output speed based on the amount of the text data pending in the buffer 240 for the text-to-speech conversion. The voice output speed may indicate a speed at which voice data is output from the text-to-speech conversion unit 255. For example, the text-to-speech conversion unit 255 may be configured to adjust a duration period of each synthesis unit based on the voice output speed. For example, the text-to-speech conversion unit 255 may be configured to adjust a total time length of voice data corresponding to a sum of the synthesis units based on the voice output speed. The electronic device 101 may control the voice output speed in the text-to-speech conversion unit 255 according to the amount (e.g., the number of input texts, the number of requests, and the number of letters in the input text) of text data stored in the buffer 240.

The TTS synthesis sound speed may be related to the entire length of the TTS synthesis sound. As described above, the TTS synthesis sound speed getting faster may mean that the entire length of the TTS synthesis sound is shorter. However, the relation does not necessarily indicate that the TTS synthesis sound speed is in a reciprocal number relationship with the entire length of the TTS synthesis sound. In the present disclosure, a change in the speed or the length of the TTS synthesis sound may be different for each phoneme configuring a synthesis sound. In other words, even if the speed of TTS synthesis sound increases by N times (where N is an integer) (e.g., 2 times), it cannot be determined that the length of TTS synthesis sound necessarily decreases by 1/N times (e.g., 1/2 times).

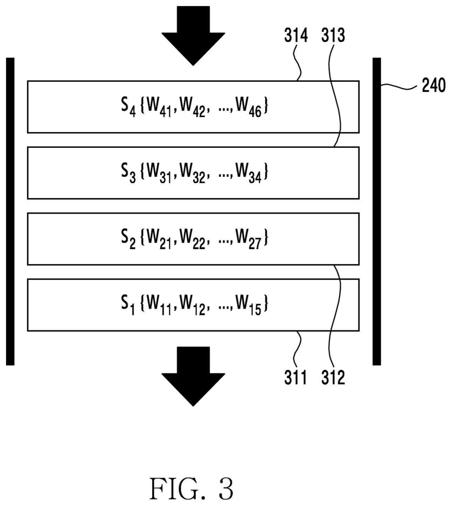

FIG. 3 illustrates an example of a buffer (e.g., the buffer 240) for text-to-speech conversion according to various embodiments. Text data waiting for text-to-speech conversion may be stored in the buffer. The buffer may correspond to a FIFO type. An electronic device 101 may input a plurality of output requests to the buffer 240 based on an application or function for speech language conversion. Each output request of the buffer 240 may correspond to text data. The text data or request thereof may be accumulated in the buffer for the text-to-speech conversion while a TTS synthesis operation is performed and/or while a TTS synthesis sound is output.

Referring to FIG. 3, the buffer 240 may store first text data 311 (S1), second text data 312 (S2), third text data 313 (S3), and fourth text data 314 (S4). The first text data 311 (S1) may include five words (e.g., W11, W12, W13, W14, and W15). For example, the five words may be formed of a total of 25 letters. As an example, the first text data 311 may be 'Device could improve your life'. The second text data 312 (S2) may include seven words (e.g., W21, W22, W23, W24, W25, W26, and W27). For example, the seven words may be formed of a total of 45 letters. As an example, the second text data 312 may be 'Eligible users can select which devices participate'. The third text data 313 (S3) may include four words (e.g., W31, W32, W33, and W34). For example, the four words may be formed of a total of 21 letters. As an example, the third text data 313 may be 'New product was released'. The fourth text data 314 (S4) may include six words (e.g., W41, W42, W43, W44, W45, and W46). For example, the six words may be formed of a total of 37 letters. As an example, the fourth text data 314 may be 'Customers can conserve energy with program'. In the example, a word for an English sentence was exemplified. On the other hand, in some languages (e.g., Korean, Japanese), a word and a postposition may be used together. In this case, a word segment may be used instead of the word. The word segment is a unit divided by spacing, and may include only the word, or the word and the postposition. As an example, text data of " 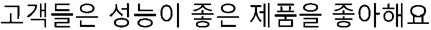 " may include five words. Descriptions for a 'word' unit in FIG. 3 may also be applied to text data of a 'word segment' unit.

According to an embodiment, the electronic device 101 may determine a voice output speed based on the number of text data stored in the buffer 240 for the text-to-speech conversion. The electronic device 101 may determine a request level corresponding to the number of the text data, and may determine the voice output speed according to the request level. For example, in case that the number (i.e., the number of text data) of requests stored in the buffer 240 for the text-to-speech conversion is one, the electronic device 101 may determine the voice output speed as 1.2 times a currently set value (v). In case that the number of requests (i.e., the number of text data) stored in the buffer 240 for the text-to-speech conversion is two, the electronic device 101 may determine the voice output speed as 1.5 times the currently set value (v). In case that the number of requests (i.e., the number of text data) stored in the buffer 240 for the text-to-speech conversion is three, the electronic device 101 may determine the voice output speed as twice the currently set value (v). In case that the number of requests (i.e., the number of text data) stored in the buffer 240 for the text-to-speech conversion is four or more, the electronic device 101 may determine the voice output speed as 2.5 times the currently set value (v). As an example, the electronic device 101 may determine that there are a total of four requests for the text-to-speech conversion stored in the buffer 240 of FIG. 3. The electronic device 101 may determine the voice output speed corresponding to '4'. The electronic device 101 may change the voice output speed as 2.5 times the currently set value (v). For a non-limiting example, the electronic device 101 may determine the voice output speed as a value proportional to the number of requests of the text data.

According to an embodiment, the electronic device 101 may determine the voice output speed based on a text length of the text data stored in the buffer 240 for the text-to-speech conversion. The electronic device 101 may determine a length level of the text length and determine the voice output speed according to the length level. For example, in case that an entire length of the text data stored in the buffer 240 for the text-to-speech conversion is less than 50 characters, the electronic device 101 may determine the voice output speed as 1.2 times the currently set value (v). In case that the entire length of the text data stored in the buffer 240 for the text-to-speech conversion is 50 characters or more but less than 100 characters, the electronic device 101 may determine the voice output speed as 1.5 times the currently set value (v). In case that the entire length of the text data stored in the buffer 240 for the text-to-speech conversion is less than 150 characters, the electronic device 101 may determine the voice output speed as twice the currently set value (v). In case that the entire length of the text data stored in the buffer 240 for the text-to-speech conversion is 150 characters or more, the electronic device 101 may determine the voice output speed as 2.5 times the currently set value (v). As an example, the electronic device 101 may determine that the text length of the text data stored in the buffer 240 of FIG. 3 is a total of 125 characters. The electronic device 101 may determine the voice output speed corresponding to the '125 characters'. The electronic device 101 may change the voice output speed to twice the currently set value (v). For a non-limiting example, the electronic device 101 may determine the voice output speed as a value proportional to amount of text data. In the examples above, the voice output speed may be set based on a currently set value (v), but it will be understood that the present disclosure is not limited thereto. For example, the voice output speed may alternatively be set based on a predetermined or default value. For example, in case that an entire length of the text data stored in the buffer 240 for the text-to-speech conversion is less than 50 characters, the electronic device 101 may determine the voice output speed as 1.2 times the default value, in case that the entire length of the text data stored in the buffer 240 for the text-to-speech conversion is 50 characters or more but less than 100 characters, the electronic device 101 may determine the voice output speed as 1.5 times the default value, and so on.

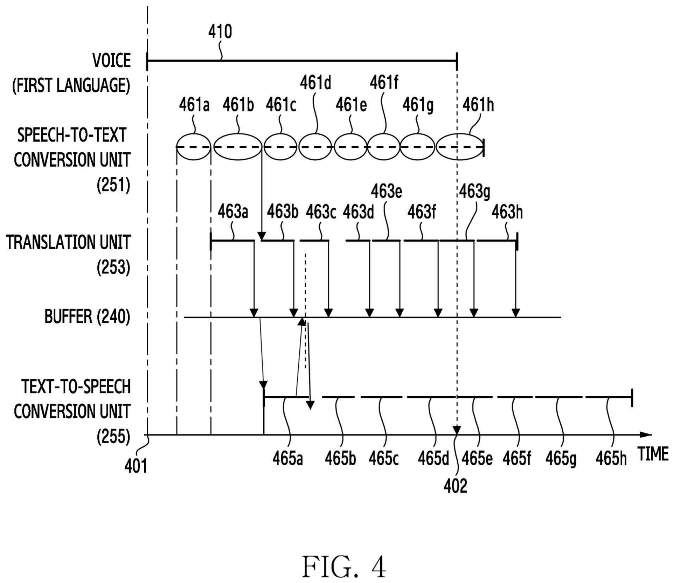

FIG. 4 illustrates an example of speech language conversion performed based on an adaptive voice output speed according to various embodiments. In FIG. 4, a situation in which an electronic device 101 listens to a voice of an utterer provided according to a first language and outputs a voice according to a second language is described.

Referring to FIG. 4, a horizontal axis indicates a passage of time. The utterer (or source of voice data) may start an utterance at a first time point 401 and end the utterance at a second time point 402. The electronic device 101 may receive voice signals 410 between the first time point 401 and the second time point 402. Voice data of the voice signals 410 may include a plurality of voice units. The electronic device 101 may generate a text unit corresponding to each voice unit through speech-to-text conversion 211. For example, the text unit may include a sentence. A speech-to-text conversion unit 251 may output text of a sentence unit. Hereinafter, an example in which the text unit is a sentence has been described, but the text unit may correspond to text of a letter unit, a word unit, or a syntactic unit. The electronic device 101 may generate the text unit through the speech-to-text conversion unit 251 (e.g., an ASR module). After a text unit corresponding to a portion of the voice signals 410 is generated, the generated text unit may be input into a translation unit 253 (e.g., an MT module). For a non-limiting example, the text unit may be input to the translation unit 253 (e.g., the MT module) in real time.

The electronic device 101 may translate text units output through the speech-to-text conversion unit 251. The electronic device 101 may provide the translation unit 253 with text units. An input of the translation unit 253 may be a unit of a text unit. For example, text may be input into the translation unit 253 in a letter unit. The translation unit 253 may collect the text units and perform a translation 213 together. The translation unit 253 may generate one translated text based on one or more text units. A unit in which the translation 213 is performed may be referred to as text data. For example, the translation unit 253 may perform a translation for one sentence by combining a plurality of letters and/or words. A unit output from the translation unit 253 may be text data. The translation unit 253 may output the text data. For example, the electronic device 101 may generate text data 463a of the second language corresponding to a set of text units 461a of the first language through the translation unit 253. The electronic device 101 may generate text data 463b of the second language corresponding to a set 461b of text units of the first language through the translation unit 253. The electronic device 101 may generate text data 463c of the second language corresponding to a set 461c of text units of the first language through the translation unit 253. The electronic device 101 may generate text data 463d of the second language corresponding to a set 461d of text units of the first language through the translation unit 253. The electronic device 101 may generate text data 463e of the second language corresponding to a set 461e of text units of the first language through the translation unit 253. The electronic device 101 may generate text data 463f of the second language corresponding to a set 461f of text units of the first language through the translation unit 253. The electronic device 101 may generate text data 463g of the second language corresponding to a set 461g of text units of the first language through the translation unit 253. The electronic device 101 may generate text data 463h of the second language corresponding to a set 461h of text units of the first language through the translation portion 253.

The electronic device 101 may store text data output from the translation unit 253 in a buffer 240. One or more pieces of text data may be stored in the buffer 240. After the text-to-speech conversion is performed, the text data of the buffer 240 that is initially input may be output from the buffer 240. The output text data may be converted into voice data for the next voice output.

The electronic device 101 may convert text data into voice data in an order (for example, in an input order) stored in a buffer. The electronic device 101 may provide the text-to-speech conversion unit 255 with the text data in the order (for example, in the input order) stored in the buffer. The electronic device 101 may generate voice data 465a corresponding to the text data 463a through the text-to-speech conversion unit 255 (e.g., a TTS module). The electronic device 101 may generate voice data 465b corresponding to the text data 463b through the text-to-speech conversion unit 255 (e.g., the TTS module). The electronic device 101 may generate voice data 465c corresponding to the text data 463c through the text-to-speech conversion unit 255 (e.g., the TTS module). The electronic device 101 may generate voice data 465d corresponding to the text data 463d through the text-to-speech conversion unit 255 (e.g., the TTS module). The electronic device 101 may generate voice data 465e corresponding to the text data 463e through the text-to-speech conversion unit 255 (e.g., the TTS module). The electronic device 101 may generate voice data 465f corresponding to the text data 463f through the text-to-speech conversion unit 255 (e.g., the TTS module). The electronic device 101 may generate voice data 465g corresponding to the text data 463g through the text-to-speech conversion unit 255 (e.g., the TTS module). The electronic device 101 may generate voice data 465h corresponding to the text data 463h through the text-to-speech conversion unit 255 (e.g., the TTS module).

The electronic device 101 may determine a voice output speed to generate each voice data. When the electronic device 101 according to embodiments of the present disclosure generates voice data, the electronic device 101 may check an amount of text data currently pending in the buffer 240 for the text-to-speech conversion. The electronic device 101 may generate voice data based on the amount of text data. For example, the electronic device 101 may generate the voice data 465a for the text data 463a. After outputting the voice data 465a, the electronic device 101 may check the buffer 240. The electronic device 101 may check the amount of text data stored in the buffer 240. For example, the electronic device 101 may check and determine that the text data 463b is waiting in the buffer 240. The electronic device 101 may determine that the number of requests stored in the buffer 240 is '1'. The electronic device 101 may adjust a voice output speed to a value v2 that is 1.2 times increased compared to a previous voice output speed v1. The electronic device 101 may generate the voice data 465b corresponding to the text data 463b based on the adjusted voice output speed. The electronic device 101 may output the voice data 465b. After outputting the voice data 465b, the electronic device 101 may check the buffer 240 again. The electronic device 101 may check and determine that the text data 463c is waiting in the buffer 240. The electronic device 101 may determine that the number of requests stored in the buffer 240 is '1'. The electronic device 101 may adjust the voice output speed to a value v3 that is 1.2 times increased compared to the previous voice output speed v2. In this way, whenever the electronic device 101 outputs voice data (or prepares voice data for output), the electronic device 101 may adjust a voice output speed by reflecting an amount of text data waiting for text-to-speech conversion (e.g. the number of stored text data requests or units, or a text length of the stored text data). In some examples, the electronic device 101 may adjust a voice output speed by reflecting a current state (e.g., a remaining capacity, the number of stored text data, and/or a text length in the stored text data) of the buffer 240.

Whenever a request for the text-to-speech conversion unit 255 (e.g., the TTS module) is received, the electronic device 101 may store text data (e.g., the text data 463a, the text data 463b, the text data 463c, the text data 463d, the text data 463e, the text data 463f, the text data 463g, and the text data 463h) corresponding to the request in the buffer 240 for the text-to-speech conversion. The electronic device 101 according to embodiments of the present disclosure may adaptively control a voice output speed according to the number (in other words, the number of text data transmitted from the translation unit 253 and stored in the buffer 240) of the requests accumulated in the buffer 240. In the present disclosure, text data, which is a unit of output request, may be configured with a word unit, a phrase unit, a sentence unit, or a sentence unit in an actual voice.

In FIG. 4, an example of controlling the voice output speed based on amount (e.g., the number of text data, and a text length of text data) of text data stored in buffer 240 has been described, but embodiments of the present disclosure are not limited thereto. According to an embodiment, the electronic device 101 may determine a voice output speed based on whether a voice of the first language is currently input to the electronic device 101 (e.g., whether voice signals are being input to the ASR module), whether a translation of the voice of the first language is requested (e.g., whether a text unit is being input to the MT module), and/or the number (e.g., the number of text units output from the speech-to-text conversion portion 251 but not yet input to the translation portion 253) of text inputs of the first language waiting for a translation. For example, as the number of text units in the first language waiting for a translation increases, the voice output speed may be faster. The elements may be used independently of the amount of the text data in the buffer 240 described through FIGS. 2A, 2B, 3 and 4, or may be used together with the amount of the text data in the buffer 240 to determine the voice output speed.

In FIG. 4, input/output units in each of the speech-to-text conversion unit 251, the translation unit 253, and the text-to-speech conversion unit 255 are displayed identically, but embodiments of the present disclosure are not limited thereto. For example, an output unit of the speech-to-text conversion unit 251 may be different from an output unit of the text-to-speech conversion unit 255. For example, an output unit of the translation unit 253 may be different from an input unit of the text-to-speech conversion unit 255.

In FIG. 4, an example of outputting voice data according to a determined voice output speed has been described, but embodiments of the present disclosure are not limited thereto. The electronic device 101 may determine a voice output speed of current voice data based on a voice output speed of previous voice data. The electronic device 101 may output the current voice data at a voice output speed corresponding to a value between the output speed of the previous voice data and the determined voice output speed to make a user of the electronic device 101 feel that the change in the voice output speed is relatively less. For example, even if the determined voice output speed is x1.5 but if the voice output speed of the previous voice data is x1, the output speed for the current voice data may be determined as x1.2. For a non-limiting example, in case that a plurality of sentences are included in the text data, the electronic device 101 may gradually increase the voice output speed whenever one sentence is output. As an example, in the electronic device 101, a voice data of a first sentence may be output at x1.2, and a voice data of a second sentence may be output at x1.4. The electronic device 101 may generate voice data to be output at the voice output speed. For another example, even if the determined voice output speed is x1.0 but if the voice output speed of the previous voice data is x1.5, the output speed for the current voice data may be determined as x1.3. As an example, in the electronic device 101, the voice data of the first sentence may be output at x 1.3, and the voice data of the second sentence may be output at x1.0. The electronic device 101 may generate voice data to be output at the voice output speed.

For a non-limiting example, a voice output speed may vary even within one sentence. For example, a voice output speed for voice data corresponding to a previous sentence may be x1, and a determined voice output speed may be x1.3. A voice output speed for a portion (e.g., a first voice segment) of the sentence of the voice data to be output may be x1.2, and a voice output speed (e.g., a second voice segment) for a portion following the portion of the sentence may be x1.3. The electronic device 101 may generate voice data to be output at the voice output speed.

FIG. 5 illustrates components of a text-to-speech conversion unit (e.g., the text-to-speech conversion unit 255) for controlling a voice output speed according to various embodiments.

Referring to FIG. 5, the text-to-speech conversion unit 255 may include a text analyzer 511, a prosody predictor 513, and a vocoder 515. The text analyzer 511 may be configured to analyze input text data. The text analyzer 511 may generate a sequence of synthesis units through an analysis of the text data. The sequence may be a set of the synthesis units. As an example, the synthesis unit may be a phoneme. As an example, the synthesis unit may be a syllable. As an example, the synthesis unit may be an N-gram (an N consecutive unit object (e.g., a word, morpheme, a syllable, and a letter)). The text analyzer 511 may transmit the sequence or the input text data to the prosody predictor 513. For a non-limiting example, each synthesis unit of the sequence may have a duration that is set by default. The duration may indicate a time at (or for) which a sound corresponding to a corresponding synthesis unit is played. According to an embodiment, in the electronic device 101, the text analyzer 511 may set the default duration of the synthesis unit based on at least one of a linguistic characteristic including a text length (e.g., the number of letters of the text data) of the input text data, the number of sentences of the input text data, the number of words of the input text data, the number of consonants of the input text data, a nationality of an utterer, a nationality of a listener, and/or another language (e.g. English, Chinese, Japanese, and Korean).

The prosody predictor 513 may generate prosody information. The prosody information may indicate information for reflecting a voice characteristic such as rhythm, an accent, stress, and a speed in a designated synthesis unit. For example, the prosody information may include information for a duration (e.g., the number of frames corresponding to each synthesis unit), mel-spectrum, power, and/or energy. The prosody information for speech synthesis may include other voice characteristic values that may be replaced (or modified) in addition to (or alternatively to) the information listed above. The duration may indicate a time that the synthesis unit lasts. The mel-spectrum may indicate a change in a frequency according to a time of a voice to be output. The power may indicate energy in a frequency component. The energy may indicate power in an entire frequency range. According to an embodiment, the electronic device 101 may generate prosody information based on a voice output speed determined according to an amount of text data for text-to-speech conversion, for example an amount of text data in a buffer (e.g., the buffer 240) for text-to-speech conversion. The electronic device 101 may generate the prosody information so that voice data may be output according to the determined voice output speed. For example, the prosody information may include a duration of a sound corresponding to the synthesis unit. The electronic device 101 may adjust a speed of a synthesis sound by changing (e.g., changing from 3 frames to 5 frames) a duration of at least a portion of the synthesis units.

The vocoder 515 may generate a synthesis sound based on the prosody information corresponding to a plurality of synthesis units. The vocoder 515 may generate voice data (e.g., second voice data of the second language) according to the generated synthesis sound. The vocoder 515 may generate a waveform corresponding to the generated synthesis sound. According to an embodiment, the electronic device 101 may change a length of the synthesis sound based on a voice output speed determined according to the amount of text data in the buffer (e.g., the buffer 240) for the text-to-speech conversion. The prosody predictor 513 may compute the length (e.g., frame information) of the synthesis sound to be generated for each synthesis unit (e.g., the phoneme), and then transmit the computation result to the vocoder 515. The vocoder 515 may generate the synthesis sound based on the length and the prosody information of the synthesis sound. As an example, the vocoder 515 may compute a length of a final synthesis sound by adding the number (e.g., the duration) of frames of the synthesis units transmitted from the prosody predictor. The vocoder 515 may generate voice data based on the length of the final synthesis sound. For example, if the length of the final synthesis sound is in a first range, the vocoder 515 may generate voice data by multiplying the length of the final synthesis sound by a weight (e.g., 0.8) corresponding to the first range (e.g., 10 seconds or more). Voice data may be generated by multiplying a weight (e.g., 0.5) corresponding to the second range (e.g., 20 seconds or more) by the length of the final synthesis sound. For a non-limiting example, the weight may be different according to a characteristic of the synthesis unit. As an example, the weight may be applied only to a phoneme corresponding to a voiced sound among the synthesis units. The vocoder 515 may change the length of the final synthesis sound by applying the weight to each frame length. Voice data according to a predetermined voice output speed (or a voice output speed adjusted in consideration of a previous sentence) may be output, by changing the length of the final synthesis sound. For a non-limiting example, a voice output speed according to an output target may be set before or at a time point at which text data is input to the text analyzer 511.

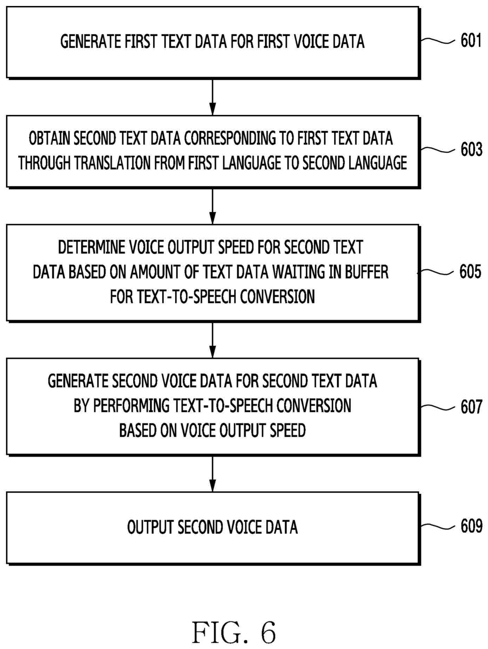

FIG. 6 illustrates an operation flow of an electronic device (e.g., an electronic device 101) for performing speech language conversion based on an adaptive voice output speed according to various embodiments.

In the following embodiment, each of the operations may be performed sequentially, but is not necessarily performed sequentially. For example, an order of the operations may be changed, and at least two operations may be performed in parallel.

Referring to FIG. 6, in an operation 601, the electronic device 101 (e.g., a processor 120) may generate first text data for first voice data. For example, the first text data may be generated based on first voice data. The electronic device 101 may receive voice data of voice signals of a first language (e.g., English). The electronic device 101 may perform speech-to-text conversion for each voice unit of the voice data. For example, the electronic device 101 may perform speech-to-text conversion through an ASR module. The electronic device 101 may generate text units through the speech-to-text conversion. A set of the text units may correspond to the first text data. A language type of the text units of the first text data may be the first language.

In an operation 603, the electronic device 101 (e.g., the processor 120) may obtain second text data corresponding to the first text data through a translation from the first language (e.g., English) to a second language (e.g., Korean). The second language may be different from the first language. The electronic device 101 may translate the text units of the first text data. The first text data may indicate a unit in (or on) which a translation is performed. The electronic device 101 may translate the text units through a MT module. The electronic device 101 may generate the second text data as a result of the translation. A language type of the second text data may be the second language.

In an operation 605, the electronic device 101 (e.g., the processor 120) may determine a voice output speed for the second text data based on an amount of text data waiting (for example in a buffer 240) for text-to-speech conversion. Text data, which is a unit of voice output, may correspond to one sentence or two or more sentences (e.g., a paragraph).

The electronic device 101 may determine the amount of text data waiting for the text-to-speech conversion. There may be a difference between a speed of text data input to a text-to-speech conversion module (e.g., a TTS module) and a speed of voice data output from the text-to-speech conversion module. Therefore, the text data may be temporarily stored in a buffer (e.g., the buffer 240). The electronic device 101 may determine the amount of text data stored in the buffer. According to an embodiment, the electronic device 101 may determine the number of text data stored in the buffer. After the translation is performed, text data of the second language may be input to the buffer. The input to the buffer may be understood as a request for the text-to-speech conversion. In other words, the electronic device 101 may determine the number of requests for the text-to-speech conversion as the amount of text data stored in the buffer. In addition, according to an embodiment, the electronic device 101 may determine a text length of the text data stored in the buffer. For example, the text length may indicate the number of letters of the text data. For a non-limiting example, spacing (' ') may be treated as one letter. For another example, the text length may indicate the number of words of the text data. In addition, according to an embodiment, the electronic device 101 may determine the amount of text data waiting for the text-to-speech conversion based on both the number of text data and the length of the text data.

The electronic device 101 may determine a voice output speed. The electronic device 101 may determine a voice output speed for the second text data based on an amount of text data waiting for text-to-speech conversion. The electronic device 101 may set the voice output speed faster as the amount of text data pending in the buffer increases. The electronic device 101 may set the voice output speed less quickly as the amount of text data pending in the buffer decreases. For example, in case that the number (i.e., the number of text data waiting in the buffer 240) of requests stored in the buffer 240 for the text-to-speech conversion is one, the electronic device 101 may determine the voice output speed as 1.5 times a currently set value (v). In case that the number (i.e., the number of text data) of requests stored in the buffer 240 for the text-to-speech conversion is two, the electronic device 101 may determine the voice output speed as twice the currently set value (v). In case that the number (i.e., the number of text data) of requests stored in the buffer 240 for the text-to-speech conversion is three, the electronic device 101 may determine the voice output speed as three times the currently set value (v). In case that the number (i.e., the number of text data) of requests stored in the buffer 240 for the text-to-speech conversion is four or more, the electronic device 101 may determine the voice output speed as four times the currently set value (v). For another example, in case that an entire length of the text data stored in the buffer 240 for the text-to-speech conversion is less than 50 characters, the electronic device 101 may determine the voice output speed as 1.2 times the currently set value (v). In case that the entire length of the text data stored in the buffer 240 for the text-to-speech conversion is 50 or more and less than 100 characters, the electronic device 101 may determine the voice output speed as 1.5 times the currently set value (v). In case that the entire length of the text data stored in the buffer 240 for the text-to-speech conversion is less than 150 characters, the electronic device 101 may determine the voice output speed as twice the currently set value (v). In case that the entire length of the text data stored in the buffer 240 for the text-to-speech conversion is 150 characters or more, the electronic device 101 may determine the voice output speed as 2.5 times the currently set value (v). As another example, the electronic device 101 may determine the voice output speed as a value proportional to the amount of text data. As an example, in case that the amount of text data exceeds a designated value (e.g., 200 characters), the electronic device 101 may determine (or maintain) the voice output speed at a fixed output speed (e.g., three times). In the examples above, the voice output speed may be set based on a currently set value (v), but it will be understood that the present disclosure is not limited thereto. For example, the voice output speed may alternatively be set based on a predetermined or default value. For example, in case that an entire length of the text data stored in the buffer 240 for the text-to-speech conversion is less than 50 characters, the electronic device 101 may determine the voice output speed as 1.2 times the default value, in case that the entire length of the text data stored in the buffer 240 for the text-to-speech conversion is 50 characters or more but less than 100 characters, the electronic device 101 may determine the voice output speed as 1.5 times the default value, and so on.

In an operation 607, the electronic device 101 (e.g., the processor 120) may generate second voice data for the second text data by performing the text-to-speech conversion. For example, the electronic device 101 (e.g., the processor 120) may generate second voice data for the second text data by performing the text-to-speech conversion based on the voice output speed. The electronic device 101 may perform the text-to-speech conversion based on the determined voice output speed. The text-to-speech conversion may include a text analysis (e.g., computation of the text analyzer 511), generation of prosody information (e.g., computation of the prosody predictor 513), and synthesis sound generation (e.g., computation of the vocoder 515). The electronic device 101 may perform the text analysis on the second text data. The electronic device 101 may determine a sequence of synthesis units corresponding to the second text data through the text analysis. A synthesis unit may be a unit forming a sound. For example, the synthesis unit may be a phoneme. As an example, when the second text data is ' 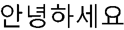 ', the synthesis units may be 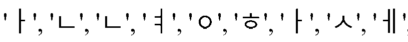 , and ' 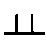 '. For example, the synthesis unit may be a syllable. As an example, when the second text data is ' 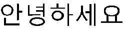 ', the synthesis units may be 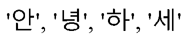 , and ' 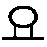 '. For example, the synthesis unit may be an N-gram (an N consecutive unit object (e.g., a word, morpheme, a syllable, and a letter)). For a non-limiting example, a method of determining the synthesis units may be different according to what kind of language (e.g., whether it is Italian, Spanish, Chinese, Japanese, or Korean) the second language is.

According to an embodiment, the electronic device 101 may apply a voice output speed in a generation step of prosody information. The electronic device 101 may generate the prosody information of the synthesis unit. The prosody information may include information for a duration (e.g., the number of frames), mel-spectrum, power, and/or energy. As an example, the electronic device 101 may determine a duration of each synthesis unit. The electronic device 101 may determine a duration of each of 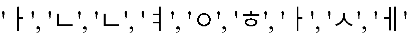 , and ' 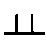 '. The electronic device 101 may generate the prosody information so that voice data may be output according to the determined voice output speed. For example, the electronic device 101 may decrease or increase a duration of at least a portion of the synthesis units. The electronic device 101 may generate the voice data according to the determined voice output speed by changing a duration of an individual synthesis unit. For a non-limiting example, a method of changing a parameter (e.g., the duration, the power, and the energy) of the prosody information of each synthesis unit may be different according to what kind of the language (e.g., whether it is Italian, Spanish, Chinese, Japanese, or Korean) the second language is.

According to an embodiment, the electronic device 101 may apply a voice output speed in the synthesis sound generation step. The electronic device 101 may generate the synthesis sound based on the synthesis units and the prosody information. The electronic device 101 may determine a length corresponding to the synthesis sound. If the length is greater than or equal to a threshold value, the electronic device 101 may adjust the length corresponding to the synthesis sound to be output by applying a weight. For example, if the length is greater than or equal to 10 seconds, the electronic device 101 may decrease an entire length by multiplying each frame (e.g., the duration) forming the synthesis sound by a weight of 0.8. For example, if the length is greater than or equal to 20 seconds, the electronic device 101 may decrease the entire length by multiplying each frame (e.g., the duration of each synthesis unit) forming the synthesis sound by a weight of 0.5. In this way, the electronic device 101 may generate voice data reflecting the determined voice output speed.

For a non-limiting example, the electronic device 101 may generate voice data according to a voice output speed by using both a method of controlling the voice output speed in the generation step of the prosody information and a method of controlling the voice output speed in the synthesis sound generation step.

In an operation 609, the electronic device 101 (e.g., the processor 120) may output the second voice data. In some examples, the electronic device 101 (e.g., the processor 120) may output the second voice data based on the determined voice output speed. A language type of the second voice data may be the second language. According to an embodiment, the electronic device 101 may output the second voice data through a speaker of the electronic device 101. A voice according to the second voice data may be output through the speaker. In addition, according to an embodiment, the electronic device 101 may output the second voice data through an external electronic device (e.g., a wearable device, a wireless earphone, or an external speaker) connected to the electronic device 101. The electronic device 101 may transmit information for the second voice data to the external electronic device. The external electronic device may output the second voice data. In case that a user of the electronic device 101 is wearing the external electronic device, the user of the electronic device 101 may hear a voice according to the second voice data through the external electronic device 101. In addition, according to an embodiment, the electronic device 101 may output the second voice data to an external electronic device (e.g., a server, a cloud) so that the electronic device 101 of another user may directly output the second voice data. The electronic device 101 may transmit information for the second voice data to the external electronic device. The electronic device of the other user may stream the second voice data by accessing the external electronic device.

In FIG. 6, after determining the voice output speed, an example of generating voice data according to the determined voice output speed has been described, but embodiments of the present disclosure are not limited thereto. In some embodiments, at least one of generating the second voice data by performing the text-to-speech conversion and outputting the second voice data may be based on the determined voice output speed. For example, after converting text data of the second language (i.e., the second text data) into the second voice data through the TTS module, the electronic device 101 may change a play speed of the second voice data to match the determined voice output speed. For a non-limiting example, after converting the text data of the second language (i.e., the second text data) into the second voice data through the TTS module, the electronic device 101 may transform the second voice data so that the play speed of the second voice data matches the determined voice output speed, and store the modified second voice data. For example, the voice output speed may be adjusted through a predetermined algorithm (e.g., a pitch synchronous overlap and add (PSOLA), and a waveform similarity overlap and add (WSOLA)) for a waveform, which is an output of a vocoder of the TTS module.

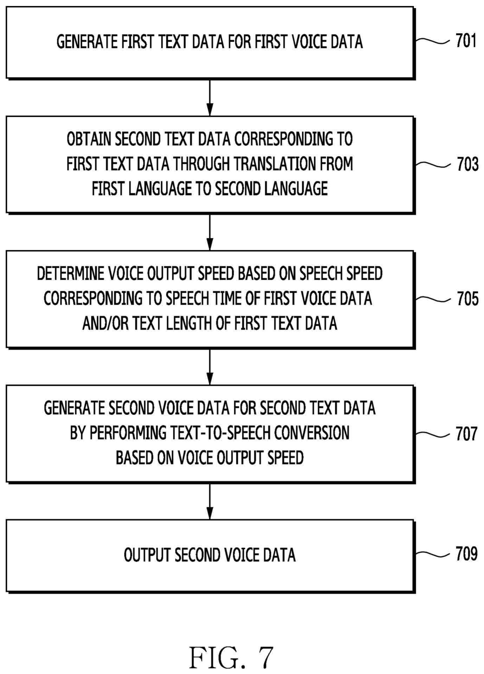

FIG. 7 illustrates an operation flow of an electronic device (e.g., an electronic device 101) for adjusting a voice output speed according to a speech speed according to various embodiments. In FIG. 7, unlike FIG. 6, operations of the electronic device 101 to adaptively change the voice output speed based on the speech speed of an utterer (or voice data source) in addition to amount of text data waiting for text-to-speech conversion are described.

In the following embodiment, each operation may be sequentially performed, but is not necessarily performed sequentially. For example, an order of each operation may be changed, and at least two operations may be performed in parallel.

Referring to FIG. 7, in an operation 701, the electronic device 101 (e.g., a processor 120) may generate first text data for first voice data. For example, the electronic device 101 (e.g., a processor 120) may generate first text data based on first voice data. The electronic device 101 may receive voice data of voice signals of a first language (e.g., English). The electronic device 101 may perform speech-to-text conversion for each voice unit of the voice data. For example, the electronic device 101 may perform the speech-to-text conversion through an ASR module. The electronic device 101 may generate text units through the speech-to-text conversion. A set of the text units may correspond to the first text data. A language type of the text units of the first text data may be the first language.

In an operation 703, the electronic device 101 (e.g., the processor 120) may obtain second text data corresponding to the first text data through a translation from the first language (e.g., English) to a second language (e.g., Korean). The second language may be different from the first language. The electronic device 101 may translate the text units of the first text data. The first text data may indicate a unit in which a translation is performed. The electronic device 101 may translate the text units through a MT module. The electronic device 101 may generate the second text data as a result of the translation. A language type of the second text data may be the second language.

In an operation 705, the electronic device 101 (e.g., the processor 120) may determine a voice output speed based on a speech speed corresponding to a speech time of the first voice data and/or a text length of the first text data.

The electronic device 101 may determine the speech time of the first voice data. For example, the electronic device 101 may obtain information for the speech time of voice units of the first voice data from the ASR module. The electronic device 101 may determine a voice length to which text units of the first language corresponding to the first text data targeted for translation are provided. In other words, the electronic device 101 may determine the speech time of the first language related to the second text data. The electronic device 101 may determine the text length of the first text data. For example, the electronic device 101 may determine the text length of the first text data from the MT module. The first text data may correspond to a unit in which a translation is performed. For example, if the second text data is generated in the MT module, the electronic device 101 may identify the text units of the first language corresponding to the second text data. The text units of the first language may be referred to as the first text data. The electronic device 101 may determine a length of letters of the text units.

The electronic device 101 may determine a speech speed. The electronic device 101 may determine the text length with respect to the speech time as the speech speed. The electronic device 101 may determine a voice output speed. The electronic device 101 may determine the voice output speed corresponding to the speech speed. For example, the electronic device 101 may determine the voice output speed as a value proportional to the speech speed. For example, the electronic device 101 may determine a speed level to which the speech speed belongs from among a plurality of speed levels. The electronic device 101 may determine the voice output speed corresponding to the determined speed level. The electronic device 101 may determine a voice output speed for text data (e.g., the second text data) of the second language in which the text-to-speech conversion is to be performed. For a non-limiting example, the electronic device 101 may determine the synthesis voice speed according to whether the first voice data is input. For example, when it is determined that the first voice data is being input at a time of determining the voice synthesis speed (or adjacent to the time of determination), the electronic device 101 may adjust the synthesis voice speed to be faster.

In an operation 707, the electronic device 101 (e.g., the processor 120) may generate second voice data for the second text data by performing the text-to-speech conversion. For example, the electronic device 101 (e.g., the processor 120) may generate second voice data for the second text data by performing the text-to-speech conversion based on the voice output speed. For the operation 707, a description of the operation 607 may be referenced. According to an embodiment, a speech speed used to determine the voice output speed may be used as a basic speed in a generation step of voice data. For example, a basic play speed of the second text data input for the text-to-speech conversion may be set according to the speech speed. Thereafter, the voice data according to an intended voice output speed may be generated through adjusting a duration in prosody information and applying a weight to an output of a vocoder to the basic play speed.

In an operation 709, the electronic device 101 (e.g., the processor 120) may output the second voice data. In some examples, the electronic device 101 (e.g., the processor 120) may output the second voice data based on the determined voice output speed. For the operation 709, a description of the operation 609 may be referenced.

In FIG. 7, an example of determining the voice output speed corresponding to the speech time by measuring the speech time related to the translated second text data has been described, but embodiments of the present disclosure are not limited thereto. For example, the electronic device 101 may determine the speech speed according to how many letters are requested for a translation during a designated period. The electronic device 101 may determine the number of letters of the text units requested for translation for the designated period as the speech speed. Thereafter, the electronic device 101 may determine the voice output speed corresponding to the speech speed (or corresponding to a level of the speech speed).

In FIG. 6, an example of determining the voice output speed for the second text data based on amount of text data waiting in a buffer for text-to-speech conversion was described, and in FIG. 7, an example of determining the voice output speed for the second text data based on the speech time and the text length of the first text data was described. However, embodiments of the present disclosure are not limited thereto. According to various embodiments of the present disclosure, elements used to determine a voice output speed for the second text data in FIGS. 6 and 7 may be used together. For example, the electronic device 101 may determine the voice output speed for the second text data based on the amount of text data waiting in the buffer for the text-to-speech conversion and the text length of the first text data. For example, the electronic device 101 may determine the voice output speed for the second text data based on the amount of text data waiting in the buffer for the text-to-speech conversion and the speech time of the first voice data. For example, the electronic device 101 may determine the voice output speed for the second text data based on the amount of text data waiting in the buffer for the text-to-speech conversion, the speech time of the first voice data, and the text length of the first text data.

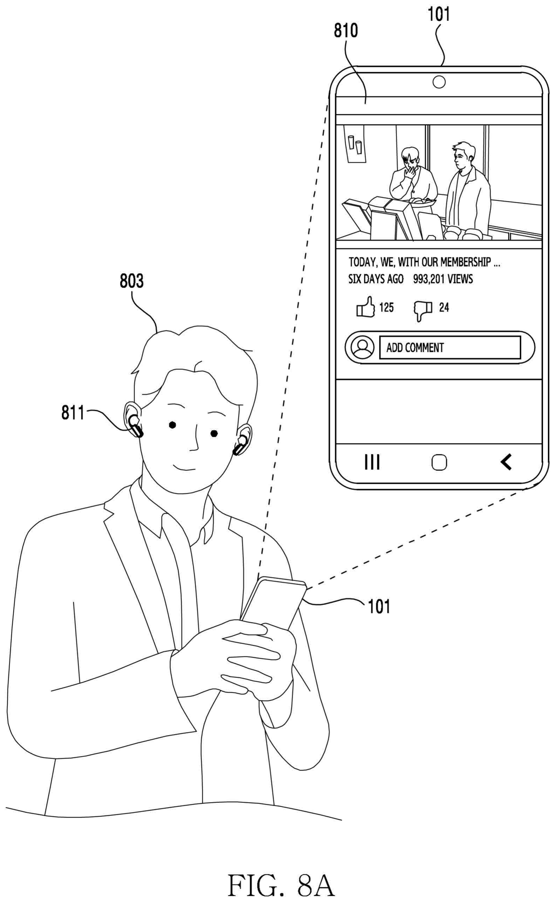

FIGS. 8A to 8C illustrate examples of speech language conversion according to various embodiments.

Referring to FIG. 8A, a user 803 of an electronic device 101 may use a speech language conversion service 810. For example, the electronic device 101 may execute a translation application. The electronic device 101 may convert voice signals of a first language (e.g., Korean) obtained through the electronic device 101 into voice signals of a second language (e.g., Spanish). The electronic device 101 may output voice data corresponding to the voice signals of the second language. For example, the electronic device 101 may execute a video application. The electronic device 101 may convert voice signals of the first language (e.g., English) provided from the video application into voice signals of the second language (e.g., Korean). The electronic device 101 may output voice data corresponding to the voice signals of the second language. The user 803 may wear a wearable device 811 (e.g., a wireless earphone, and/or a headphone). The electronic device 101 may transmit signals including voice data generated through a speech language conversion function to the wearable device 811. The signals may cause the wearable device 811 to output the voice data. In response to a reception of the signals, the wearable device 811 may provide the user 803 with the voice signals of the second language. The user 803 may listen to a voice of the second language through the wearable device 811 instead of a voice of the first language received by the electronic device 101. In some examples, the electronic device 101 may not transmit the voice signals of the first language to the wearable device 811, (i.e. may only transmit the voice signals of the second language) such that the original voice signals of the video application (i.e. speech in English) are replaced by the voice signals of the second language (i.e. the translated speech in Korean) when audio is output through the wearable device 811. In FIG. 8A, embodiments of the present disclosure are exemplified as a wearable device, but are not limited thereto. A device (e.g., an earphone, and/or a wired speaker) that is connected to the electronic device 101 receiving a first language voice and outputs voice signals of the second language from the electronic device 101 may be understood as an embodiment of the present disclosure.

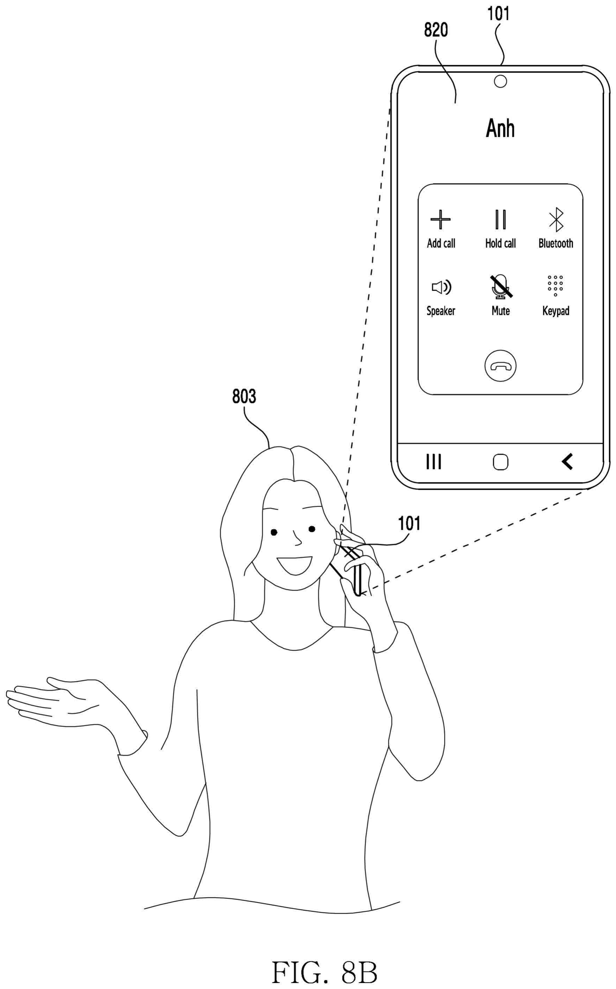

Referring to FIG. 8B, the user 803 of the electronic device 101 may use a speech language conversion service 820. For example, the electronic device 101 may execute a phone application. The electronic device 101 may be performing a telephone service through a call connection with an external electronic device. While the phone application is being executed, the electronic device 101 may convert voice signals of a first language (e.g., Korean) transmitted from the external electronic device into voice signals of a second language (e.g., Spanish). The electronic device 101 may output voice data corresponding to the voice signals of the second language. For a non-limiting example, the electronic device 101 may be configured to output separate signals for offsetting the voice of the first language so that the user 803 does not feel uncomfortable due to a synthesis of the voice of the first language and the voice of the second language.

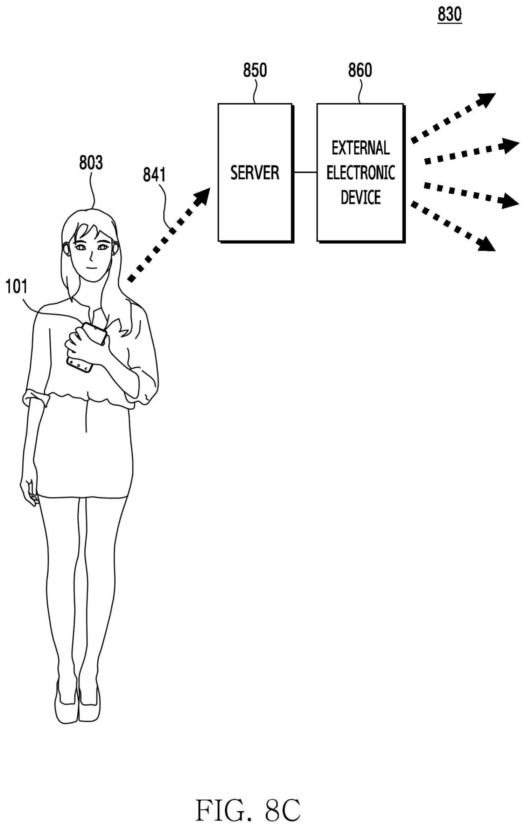

Referring to FIG. 8C, the user 803 of the electronic device 101 may use a speech language conversion service 830. Unlike the user 803 translating a voice of a received call, a sound of the user 803 may also be transmitted to a calling counterpart in a translated state. For example, the user 803 of the electronic device 101 may utter the voice of the first language. The voice of the first language may be input to the electronic device 101, and the voice input to the electronic device 101 may be generated as voice data 841 of the second language. The electronic device 101 may transmit the voice data 841 of the second language to a call server 850. The server 850 may transmit the voice data 841 of the second language to an external electronic device 860 (e.g., a mobile phone of another user). As another example, the electronic device 101 may execute a conference application. The electronic device 101 may be performing an online conference service through a connection with the server 850 that provides a conference. While the conference application is being execute, in the electronic device 101, the user 803 of the electronic device 101 may utter the voice of the first language. The voice of the first language may be input to the electronic device 101, and the voice input to the electronic device 101 may be generated as the voice data 841 of the second language. The electronic device 101 may transmit the voice data 841 of the second language to the server 850. The server 850 may transmit the voice data 841 of the second language to the external electronic device 860 (e.g., a conference room speaker, another electronic device connected to the server 850).

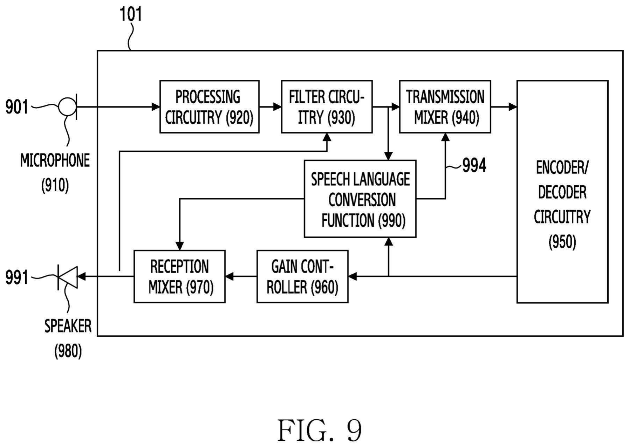

FIG. 9 illustrates functional components of an electronic device (e.g., electronic device 101) using a speech language conversion function according to various embodiments.

Referring to FIG. 9, the electronic device 101 may include components for input voice signals 901. For example, the electronic device 101 may include a microphone 910 (e.g., an input module 150), processing circuitry 920, filter circuitry 930, a transmission mixer 940, and encoder/decoder circuitry 950. The electronic device 101 may include components for output voice signals 991. For example, the electronic device 101 may include a gain controller 960, a reception mixer 970, and a speaker 980. At least a portion of components for the input voice signals 901 and components for the output voice signals 991 may be understood as a component of the audio module 170 of FIG. 1.

According to an embodiment, the electronic device 101 may include a speech language conversion function 990 as an application, a module, and/or a function (or a program and/or a code) associated with the application. Operations for the speech language conversion function 990 may be understood to be performed by a control unit (e.g., a control unit 230) (it may be an application and/or a module equipped with a corresponding function) configured to perform the corresponding function.

The electronic device 101 may obtain the input voice signals 901 of a first language through a microphone (however, it should be understood that embodiments are not limited thereto, and that voice signals may be obtained from an application or function of the electronic device or from an external device). The electronic device 101 may generate voice signals through the processing circuitry 920 and the filter circuitry 930. For example, the filter circuitry 930 may include an acoustic echo canceller (AEC) for echo removal and/or a noise suppressor (NS) for ambient noise removal. The filtered voice signals may be provided to the speech language conversion function 990. For a non-limiting example, voice signals 994 translated according to the speech language conversion function 990 may be provided to the transmission mixer 940. The transmission mixer 940 may mix the filtered voice signals of the first language and the voice signals 994 translated into the second language according to a designated criterion and provide the result to the encoder/decoder circuitry 950. For a non-limiting example, an operation of the transmission mixer 940 may be omitted, and the voice signals 994 of the translated language (the second language) may be transmitted to the encoder/decoder circuitry 950.

The encoder/decoder circuitry 950 may provide the gain controller 960 with information related to voice signals to be output. The encoder/decoder circuitry 950 may provide the speech language conversion function 990 with the information related to voice signals to be output. The gain controller 960 may provide the reception mixer with gain control information. The receiving mixer 970 may obtain voice data of the first language, which is an output of the speech language conversion function 990. The reception mixer 970 may transmit the output voice signals 991 to the speaker 980 (e.g., the audio output module 155). The reception mixer 970 may mix the gaincontrolled voice signals (e.g., signals of the second language) and the translated voice signals (e.g., signals of the first language) according to a designated criterion and output the result to the speaker 980. For a non-limiting example, an operation of the reception mixer 970 may be omitted, and the translated voice signals may be directly output to the speaker 980.

In FIG. 9, an example in which voice data is output through the speaker of the electronic device 101 has been described, but embodiments of the present disclosure are not limited thereto. As in FIG. 8A or 8C, if voice data of the second language is output through an external electronic device connected to the electronic device 101, the electronic device 101 may be configured to transmit signals including the voice data to the external electronic device (for example to an external audio output device, such as a speaker, or to another electronic device via a server) through wireless communication circuitry instead of the speaker 980.

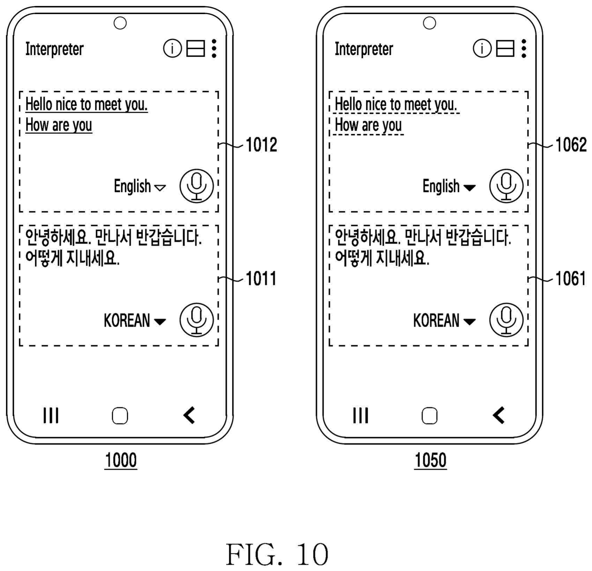

FIG. 10 illustrates an example of a screen of a conversation mode in an application for speech language conversion according to various embodiments.

Referring to FIG. 10, an electronic device (e.g., an electronic device 101) may execute an application for speech language conversion. For example, the electronic device 101 may execute an interpretation application. The electronic device 101 may execute a conversation mode of the interpretation application. The electronic device 101 may execute (or activate) an ASR module in response to execution of the call application. A user of the electronic device 101 may speak in a first language (e.g., Korean). The electronic device 101 may obtain voice data of the first language (e.g., Korean) through a microphone and the ASR module. The electronic device 101 may convert the voice data of the first language (e.g., Korean) through the ASR module. The electronic device 101 may convert the voice data of the first language into first text data. The electronic device 101 may convert the first text data into second text data through a translation from the first language to a second language (e.g., English). The electronic device 101 may generate second voice data corresponding to the second text data through a TTS module. The electronic device 101 may output the second voice data.

While executing the conversation mode, the electronic device 101 may display a screen 1000. The screen 1000 may include a first area 1011 and a second area 1012. The first area 1011 may be used to record speech content of the user of the electronic device 101. For example, in case that the user of the electronic device 101 says 'Hello. Nice to meet you. How are you?', text data (e.g., ' 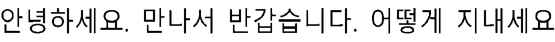 ') of the first language (e.g.,

Korean) may be displayed in the first area 1011. For example, the first language may be set in Korean. The second area 1012 may be used to record text to be output through the TTS module of the electronic device 101. For example, text data (e.g., Hello nice to meet you. How are you...) of the second language (e.g., English) may be displayed in the second area 1012. For example, the second language may be set in English.

While displaying text data (i.e., the first text data) before a translation and text data (i.e., the second text data) after the translation, the electronic device 101 may output the second voice data corresponding to the second text data. While the electronic device 101 outputs the second voice data of the second language, the electronic device 101 may display an emphasis effect (e.g., bolden, color display) to indicate the second text data corresponding to the second voice data among entire text. As an example, the electronic device 101 may display the second text data in blue. According to an embodiment, the electronic device 101 may use the emphasis effect to inform the user of a voice output speed. While executing the translation application, the electronic device 101 may display a screen 1050. The screen 1050 may include a first area 1061 and a second area 1062. The first area 1061 of the screen 1050 may be used to record speech content of the user of the electronic device 101. For the first area 1061, a description of the first area 1011 may be referred. The second area 1062 of the screen 1050 may be used to record text to be output through the TTS module of the electronic device 101. For the second area 1062, a description of the second area 1012 may be referenced. For example, a voice output speed of the second text data on the screen 1000 may be x1.3. A voice output speed of the second text data on the screen 1050 may be x1.5. As an example, an underline of a solid line may be displayed on the second text data on the screen 1000, and an underline of a dotted line may be displayed on the second text data on the screen 1050. As an example, a thickness of the second text data on the screen 1000 may be '1', and a thickness of the second text data on the screen 1050 may be '3'. As an example, a color of the second text data on the screen 1000 may be 'blue', and a color of the second text data on the screen 1050 may be 'red'.

In FIG. 10, an example in which the text data of the second language is displayed in an upper area of a user interface and the text data of the first language is displayed in a lower area of the user interface has been described, but embodiments of the present disclosure are not limited thereto. For example, the electronic device 101 may display the text data of the first language in the upper area and the text data of the second language in the lower area, in the user interface related to the translation application. For a non-limiting example, the user interface illustrated in FIG. 10 may be displayed in a manner that is easy for a counterpart of the user of the electronic device 101 to see and a manner rotated by approximately 180 degrees. As an example, the text data of the first language may be displayed in the lower area and the text data of the second language may be displayed in the lower area. As an example, the text data of the first language may be displayed in the lower area and the text data of the second language may be rotated by 180 degrees and displayed in the upper area.

In FIG. 10, an example in which the emphasis effect is applied to the text, which is a language after the translation, has been described, but embodiments of the present disclosure are not limited thereto. The emphasis effect may also be applied to the language before the translation, in addition to the language after the translation. For example, the electronic device 101 may apply the emphasis effect to the text on the first area 1061 in addition to the second area 1062. In addition, for example, the electronic device 101 may apply the emphasis effect to both texts in the first area 1061 and the second area 1062.

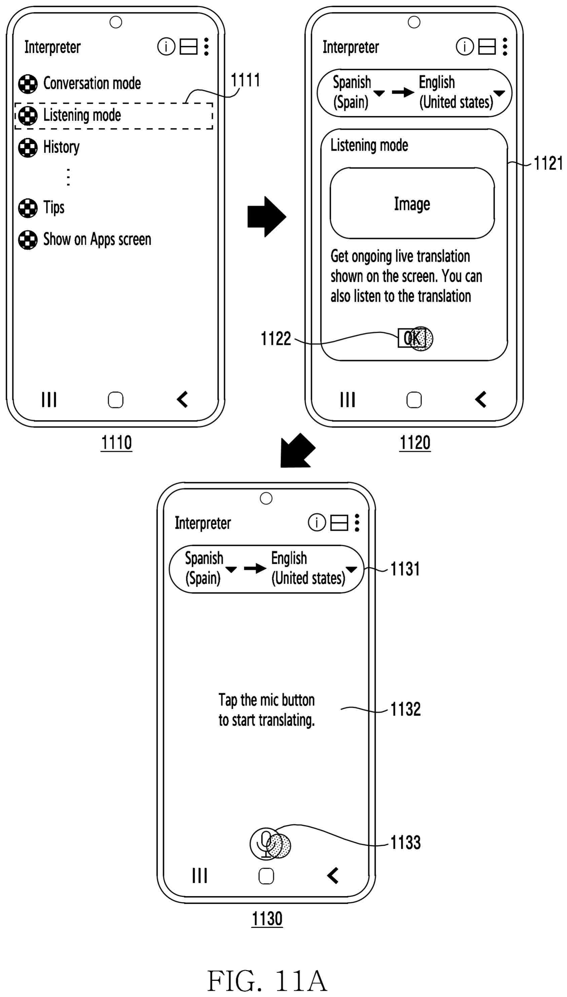

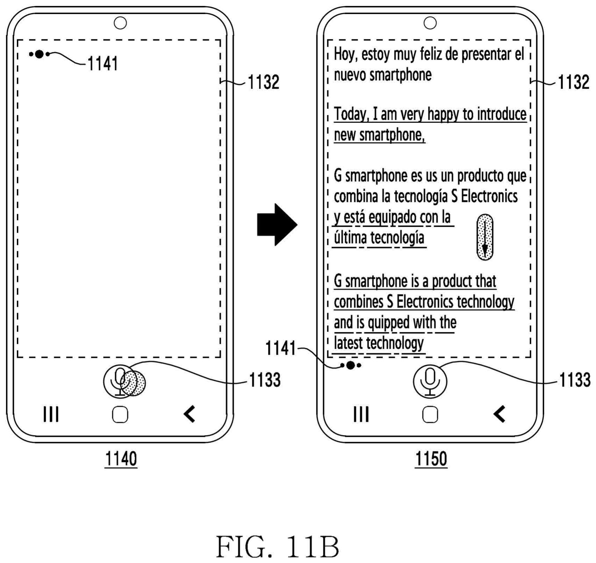

FIGS. 11A and 11B illustrate an example of a user interface entering a listening mode in an application for speech language conversion according to various embodiments.

Referring to FIGS. 11A and 11B, an electronic device 101 may display a screen 1110 for controlling the application for speech language conversion. The electronic device 101 may display a visual object 1111 on the screen 1110. The visual object 1111 may be used to enter a listening mode in the application.

The electronic device 101 may display a screen 1120. The electronic device 101 may display the screen 1120 in response to a user input (e.g., a touch input, and a voice input) with respect to the visual object 1111. The screen 1120 may include a pop-up screen 1121 and a visual object 1122 for displaying a description of the listening mode. In some embodiments, screen 1120 may not be displayed, and the electronic device may proceed directly from screen 1110 to 1130. In some embodiments, screen 1120 may only be displayed the first time the listening mode is used, and/or the user may be able to configure the electronic device to stop showing screen 1120.

The electronic device 101 may display a screen 1130. The electronic device 101 may display the screen 1130 in response to a user input (e.g., the touch input, and the voice input) with respect to the visual object 1122. The screen 1130 may include a control interface 1131 for designating a translation language, a text area 1132, and a visual object 1133 (e.g., a microphone icon) for executing a listening function. The control interface 1131 may be used to set a language (i.e., a second language (e.g., English)) requiring a translation and a language (i.e., a first language (e.g., Spanish)) in which the translation has been performed. Since the translation has not been performed yet, a guide message (e.g., 'Tap to mic button to start translating') for guiding execution of a voice translation may be displayed in the text area 1132. The visual object 1133 may be used for the device 101 to execute the listening function for obtaining a voice from the outside in the listening mode of the translation application.

The electronic device 101 may display a screen 1140. The electronic device 101 may display the screen 1140 in response to a user input (e.g., the touch input, and the voice input) with respect to the visual object 1133. On the screen 1140, the electronic device 101 may be waiting for a voice input. The electronic device 101 may be configured to monitor whether voice signals are input through an activated ASR module. For a non-limiting example, the electronic device 101 may display a visual object 1141 indicating that monitoring is being performed.

The electronic device 101 may display a screen 1150. If voice signals are input, the electronic device 101 may generate text data (e.g., Hoy, estoy muy Feliz de...) of the first language corresponding to voice data of the voice signals. The electronic device 101 may display the text data of the first language on the text area 1132. The electronic device 101 may generate text data of the second language corresponding to the text data of the first language through a translation. The electronic device 101 may display the text data (e.g., Today. I am very happy to introduce...) of the second language on the text area 1132. While displaying the text data of the second language, the electronic device 101 may output voice signals corresponding to the text data of the second language. For a non-limiting example, the electronic device 101 may display a plurality of text data (e.g., a plurality of sentences) on the text area 1132.

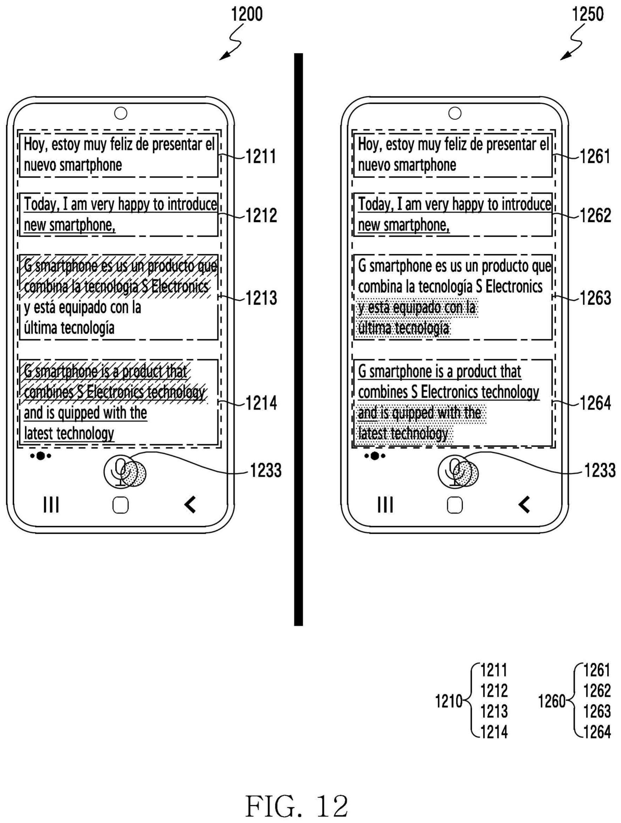

FIG. 12 illustrates an example of a screen of a listening mode of an application for speech language conversion according to various embodiments.

Referring to FIG. 12, an electronic device (e.g., an electronic device 101) may display a screen 1200. The screen 1200 may include a text area 1210 and a visual object 1233 (e.g., a microphone icon) for executing a listening function. First text data (e.g., text in Spanish) before a translation and second text data (e.g., text in English) after the translation may be displayed in the text area 1210. The visual object 1233 may be used for the device 101 to execute a listening function for obtaining a voice from the outside in a listening mode of the translation application. Since the listening mode corresponds to a one-way translation rather than a conversation, the electronic device 101 may continuously receive voice signals of a first language through an input module (e.g., a microphone 910). An utterer may provide the voice signals in the first language. The electronic device 101 may provide voice signals of a second language by performing an interpretation for each section.

According to an embodiment, the electronic device 101 may use an emphasis mark (e.g., bolden) to indicate a translated portion on a display area. For example, the text area 1210 may include a first area 1211, a second area 1212, a third area 1213, and a fourth area 1214. The utterer may provide the voice signals in the first language. The text data of the first language (e.g., Spanish, that is a language before the translation) corresponding to the voice data of the voice signals may be displayed in the first area 1211. The text data of the second language (e.g., English, that a language after the translation) corresponding to the text data displayed in the first area 1211 may be displayed in the second area 1212. The text data of the first language (e.g., Spanish, that is a language before the translation) corresponding to the next voice data of the voice signals may be displayed in the third area 1213. The text data of the second language (e.g., English, that is a language after the translation) corresponding to text data displayed in the third area 1213 may be displayed in the fourth area 1214. For example, the electronic device 101 may display texts in the first area 1211 and the third area 1213 without an underline. The electronic device 101 may display texts in the second area 1212 and the fourth area 1214 together with the underline. For another example, the electronic device 101 may display texts in the first area 1211 and the third area 1213 in a basic thickness. The electronic device 101 may display texts in the second area 1212 and the fourth area 1214 in a thickness thicker than the basic thickness.

While displaying texts in the display area, the electronic device 101 may output a voice corresponding to some of texts of the second language. According to an embodiment, the electronic device 101 may apply a specific visual effect (e.g., thickness, and color) to the text portion, or display an additional visual effect (e.g., an underline, and shade) around the text portion, in order to distinguish the text portion corresponding to a voice currently output to the user from other text portions. To represent a visual effect, a screen 1250 may be exemplified. A text area 1260 of the screen 1250 may include a first area 1261, a second area 1262, a third area 1263, and a fourth area 1264. Descriptions of the first area 1211, the second area 1212, the third area 1213, and the fourth area 1214 may be referenced, respectively, for the first area 1261, the second area 1262, the third area 1263, and the fourth area 1264. The area on the screen 1200 and the area corresponding to the screen 1250 include the same text data, but may be classified through different effects (e.g., the underline, the color, the thickness, and markup). For example, while the electronic device 101 displays the screen 1200, the electronic device 101 may output voice signals at x1.5 basic speed. While the electronic device 101 displays the screen 1250, the electronic device 101 may output the voice signals at the basic speed. As an example, on the screen 1200, the electronic device 101 may display a highlight (markup) in a first pattern on the text portion corresponding to the currently output voice. On the screen 1250, the electronic device 101 may display the highlight (mark-up) in a second pattern on the text portion corresponding to the currently output voice. As another example, on the screen 1200, the electronic device 101 may display the text portion corresponding to the currently output voice in red. On the screen 1250, the electronic device 101 may display the text portion corresponding to the currently output voice in green. As another example, on the screen 1200, the electronic device 101 may display the text portion corresponding to the currently output voice with an underline in thickness of '10'. On the screen 1250, the electronic device 101 may display the text portion corresponding to the currently output voice with an underline in thickness of '3'.

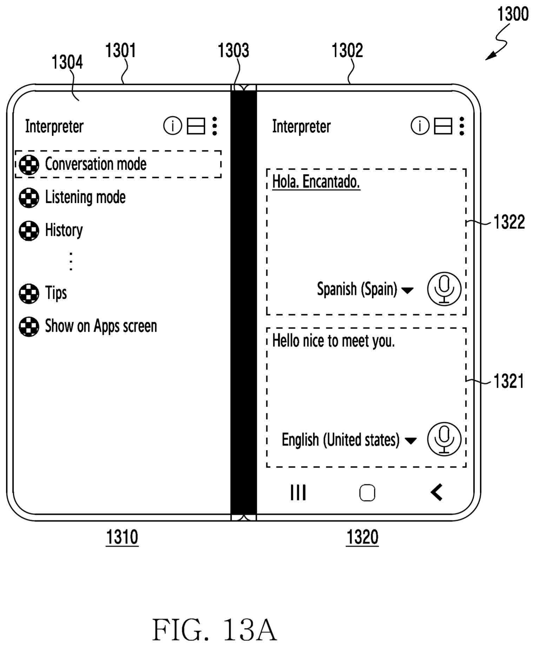

FIG. 13A illustrates an example of a screen of a conversation mode of an application for speech language conversion in a foldable type electronic device (e.g., an electronic device 101) according to various embodiments.

Referring to FIG. 13A, the electronic device 101 may include a first housing portion 1301, a second housing portion 1302, and a hinge structure 1303 for rotatably coupling the first housing portion 1301 and the second housing portion 1302. The electronic device 101 may include a display 1304 (e.g., a display module 160) disposed across the first housing portion 1301 and the second housing portion 1302. A display area of the display may include a first display area (e.g., a screen 1310) corresponding to the first housing portion and a second display area (e.g., a screen 1320) corresponding to the second housing portion.

The electronic device 101 may display a screen 1300. The electronic device 101 may display the screen 1310 through the first display area corresponding to the first housing portion. The screen 1310 may include a control interface for determining an operation mode in an application (e.g., a translation application, or an interpretation application) for speech language conversion. For example, the screen 1310 may include a visual object for entering the conversation mode and/or a visual object for entering the listening mode. The electronic device 101 may provide the visual object for entering the conversation mode with a user input.

The screen 1320 may include a user interface according to a currently set operation mode. For example, in response to the user input to the visual object for entering the conversation mode, the electronic device 101 may display a user interface for the conversation mode on the second display area. The screen 1320 may include the user interface in the conversation mode. The screen 1320 may include a first area 1321 for the first language and a second area 1322 for the second language. Text data (e.g., which is text before the translation, displayed in English) of the first language may be displayed in the first area 1321. The electronic device 101 may perform a translation from the first language to the second language. The electronic device 101 may generate text data (e.g., which is text after the transition, displayed in English) of the second language through the translation. The text data (e.g., which is text after the translation, displayed in Spanish) of the second language may be displayed in the second area 1322. For the user interface for the conversation mode, the user interface of FIG. 10 may be referred. As an example, the first area 1321 may correspond to the first area 1011 of FIG. 10. The second area 1322 may correspond to the second area 1012 of FIG. 10.

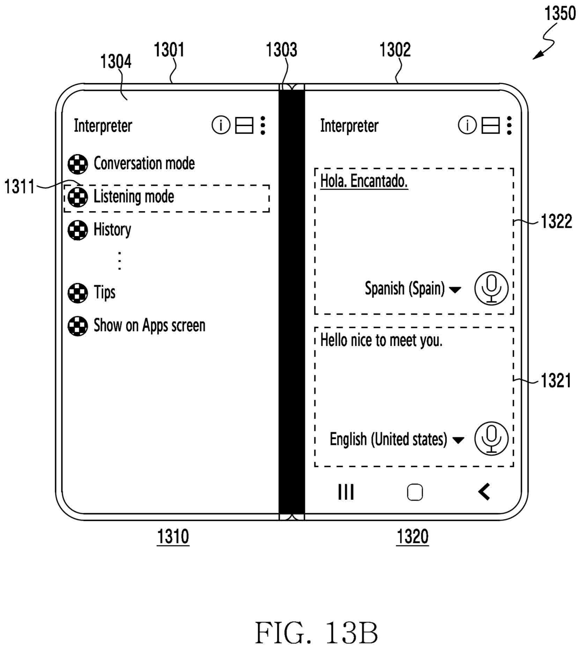

FIG. 13B illustrates an example of a screen of a listening mode of an application for speech language conversion in a foldable type electronic device (e.g., an electronic device 101).

Referring to FIG. 13B, the electronic device 101 may include the first housing portion 1301, the second housing portion, and the hinge structure 1303 for rotatably coupling the first housing portion 1301 and the second housing portion 1302. The electronic device 101 may include the display 1304 disposed across the first housing portion 1301 and the second housing portion 1302. The display area of the display may include the first display area (e.g., the screen 1310) corresponding to the first housing portion 1301 and the second display area (e.g., the screen 1320) corresponding to the second housing portion 1302. The electronic device 101 may display a visual object 1311 on the screen 1310. The visual object 1311 may be used to enter a listening mode in the application.

The electronic device 101 may display a screen 1350. The electronic device 101 may display the screen 1310 through the first display area corresponding to the first housing portion. The screen 1310 may include the control interface for determining an operation mode in an application (e.g., the translation application, or the interpretation application) for speech language conversion. For example, the screen 1350 may include a visual object for entering the conversation mode and/or a visual object for entering the listening mode. The electronic device 101 may provide the visual object for entering the conversation mode with a user input. A screen 1350 may include a user interface according to a currently set operation mode. For example, in response to the user input to the visual object for entering the listening mode, the electronic device 101 may display the user interface for the listening mode on the second display area. The screen 1350 may include the user interface in the listening mode. The screen 1350 may include the display area. The electronic device 101 may sequentially display the text data of the first language and the text data of the second language in a situation in which voice signals of the first language are translated into voice signals of the second language. Specifically, the electronic device 101 may generate the text data (e.g., which is text before the translation, displaying the text in Spanish) of the first language corresponding to the voice data of the first language in the listening mode. The electronic device 101 may display the text data of the first language. The electronic device 101 may perform the translation from the first language to the second language. The electronic device 101 may generate the text data (e.g., which is text after the translation, displaying the text in English) of the second language through the translation.

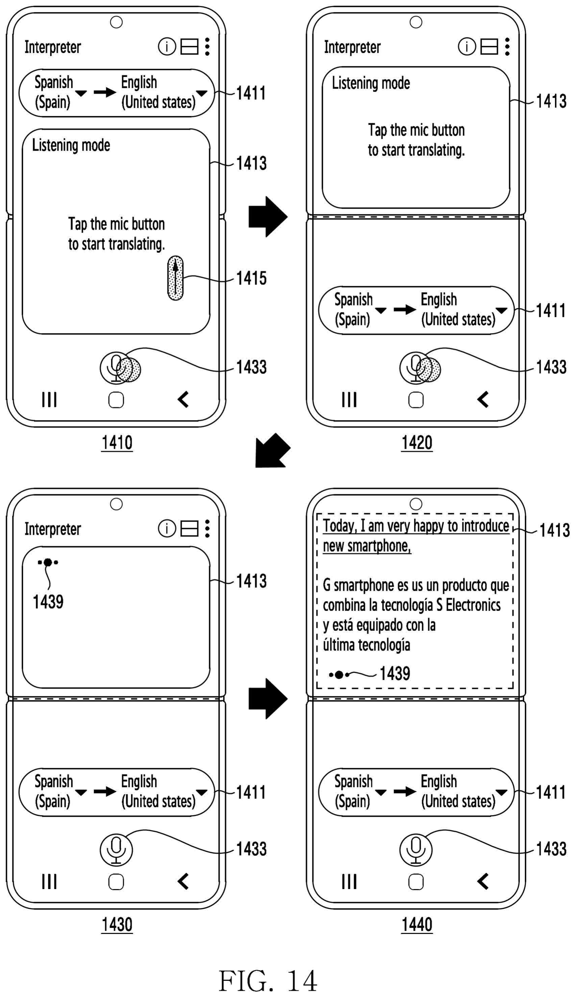

FIG. 14 illustrates an example of a screen of a listening mode of an application for speech language conversion in a foldable type electronic device (e.g., an electronic device 101) according to various embodiments. The electronic device 101 may include a first housing portion, a second housing portion, and a hinge structure for rotatably coupling the first housing portion and the second housing portion. The electronic device 101 may include a display disposed across the first housing portion and the second housing portion. A display area of the display may include a first display area corresponding to the first housing portion and a second display area corresponding to the second housing portion. A state of the electronic device 101 may be defined according to an angle formed by the first housing portion and the second housing portion. The electronic device 101 may operate in a mode corresponding to the state of the electronic device 101. For example, a state in which the first housing portion and the second housing portion form approximately 180 degrees so that the first display area and the second display area face the same direction, may be referred to as an unfolded state. A state in which the first housing portion and the second housing portion form an angle of less than 180 degrees so that the first display area and the second display area face different directions, may be referred to as a flex state. A state in which the first housing portion and the second housing portion form an angle of less than approximately 15 degrees so that the first display area and the second display area face opposite directions, may be referred to as a folded state. The electronic device 101 may display a different screen in each of the unfolded state, the flex state, and the folded state.

Referring to FIG. 14, the electronic device 101 may display a screen 1410 in the unfolded state. The screen 1410 may include a control interface 1411 for setting a translation language, a text area 1413, and a visual object 1433 (e.g., a microphone icon) for executing a listening function. The state of the electronic device 101 may be changed from the unfolded state to the flex state. The electronic device 101 may display a screen 1420 in response to a change 1415 to the flex state. On the screen 1420, the text area 1413 may be displayed on the first display area of the first housing portion of the electronic device 101. The control interface 1411 and the visual object 1433 for executing the listening function may be displayed in the second display area of the second housing portion of the electronic device 101.

The electronic device 101 may receive a user input for the visual object 1433. The electronic device 101 may execute a speech language conversion function in response to the user input. As the electronic device 101 executes the speech language conversion function, the electronic device 101 may monitor voice signals. For example, the electronic device 101 may check the voice signals received from the outside through an ASR module. For a non-limiting example, the electronic device 101 may display a screen 1430 including a visual object 1439 notifying that the electronic device 101 is currently monitoring voice signals.

If the electronic device 101 detects voice signals, the electronic device 101 may display the screen 1440. For example, if the electronic device 101 detects voice signals, the electronic device 101 may generate first text data corresponding to the voice signals. A language type of the voice signals may be a first language (e.g., English). A language type of the first text data may be the first language (e.g., English). The electronic device 101 may perform a translation for the first text data. The electronic device 101 may perform the translation from the first language to a second language (e.g., Spanish). The electronic device 101 may generate second text data corresponding to the first text data through the translation. The electronic device 101 may display the first text data and the second text data. The electronic device 101 may display the first text data and the second text data on the text area 1413.

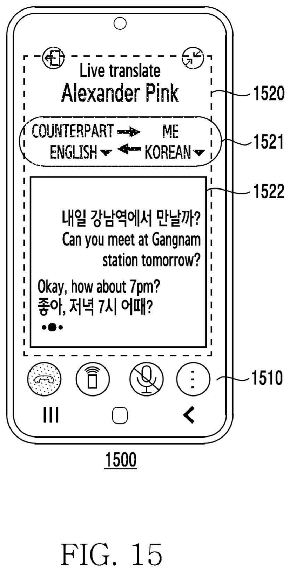

FIG. 15 illustrates an example of a screen of a function for speech language conversion during a call according to various embodiments. While not only a separate application for speech language conversion but also a separate application (e.g., a call application, or a video application) is being executed, a more improved service may be provided also in another application through the speech language conversion function. For example, a speech language conversion function may be executed simultaneously with another application (e.g. a call application or media application) to provide the speech language conversion functionality described herein to the other application.

Referring to FIG. 15, an electronic device 101 may execute the call application. The electronic device 101 may execute the call application for a call between a user of the electronic device 101 and a user of another electronic device (hereinafter, an external electronic device) (e.g., an electronic device 102, an electronic device 104, and a server 108). The electronic device 101 may display a screen 1500. The screen 1500 may include a user interface 1510 for the call application. While the call application is being executed, the electronic device 101 may execute the speech language conversion function. For example, the electronic device 101 may execute the speech language conversion function in response to a designated input (e.g., a touch input, or a voice input). For another example, the electronic device 101 may execute the speech language conversion function in response to a designated event (e.g., a phone connection with a counterpart separately designated for the speech language conversion, or a phone connection with a counterpart designated by a name different from a device setting in a contact). For a non-limiting example, the electronic device 101 may display an inquiry message asking the user whether to execute the speech language conversion function. As an example, the inquiry message may be displayed before a session is established with the counterpart through the call application or within a certain time after the session is established. As another example, the inquiry message may be displayed in response to a separate input on the electronic device 101.

While the call application is being executed, in response to execution of the speech language conversion function, the electronic device 101 may display a user interface 1520 for the speech language conversion function. The user interface 1520 may include a control interface 1521 and a conversation area 1522. The control interface 1521 may be used to set a language (i.e., a first language (e.g., English)) requiring a translation and a language (i.e., a second language (e.g., Korean)) in which the translation has been performed (or will be performed). The conversation area 1522 may be used to display a call between a user of the electronic device 101 and a counterpart (i.e., a user of the external electronic device 101) of the user as text data. For example, the user of the electronic device 101 may provide voice signals of Korean. The user of the external electronic device may provide voice signals of English. Assuming a situation in which the user of the electronic device 101 speaks, the electronic device 101 may convert the voice signals of Korean into the voice signals of English, through the speech language conversion function according to embodiments of the present disclosure. The electronic device 101 may adjust a speed of the converted English voice signals through the disclosed methods and transmit the converted English voice signals to the external electronic device. The transmitted English voice signals may be output through the external electronic device. The electronic device 101 may output the English voice signals to the external electronic device through a server. According to an embodiment, the electronic device 101 may mix the input Korean voice signals and the speed-adjusted English voice signals in a sound signals area, and transmit the mixed signals to the external electronic device. A weighted sum may be used for the mixing. For example, the electronic device 101 may perform the mixing by applying more weights to the English voice signals. The electronic device 101 may display text data corresponding to the Korean voice signals and text data corresponding to the English voice signals on the conversation area 1522, with respect to content spoken by the user. Assume a situation where the user (i.e., the counterpart of the user of the electronic device 101) of the external electronic device utters. The electronic device 101 may obtain an English voice signals from the external electronic device. The electronic device 101 may convert the English voice signals into the Korean voice signals through the speech language conversion function according to embodiments of the present disclosure. The electronic device 101 may display, on the conversation area 1522, text data corresponding to the English voice signals and text data corresponding to the Korean voice signals, with respect to content spoken by the user of the external electronic device.

If a voice output speed of a TTS module varies according to a situation while the electronic device 101 performs interpretation, the implantation of the embodiment of the present disclosure may be confirmed. For example, the implantation of the embodiment of the present disclosure may be confirmed through a difference between a voice output speed of the voice signals of the second language of the TTS module in a situation where the user quickly inputs a plurality of sentences into the electronic device 101 in the first language, and a voice output speed of the voice signals of the second language of the TTS module in a situation where the user inputs the plurality of sentences in the first language relatively slowly in the electronic device 101. As the sentences of the first language are input faster, the voice output speed of the voice signals of the second language may be faster.

The electronic device 101 according to embodiments of the present disclosure may adjust the voice output speed based on an amount (e.g., the number of text data, and a length of text in the text data) of the text data requested for text-to-speech conversion. Through this, when an interpreter listening mode is played through the text-to-speech conversion, in case that an utterer's words are fast or there are many sentences, a problem in which a gap between a portion provided by the utterer and a portion obtained by a listener increases may decrease. As the gap decreases, the user may feel a more improved real-time performance in a speech language conversion service such as an interpretation listening mode. Furthermore, a memory performance of the electronic device may be improved by outputting waiting text data more quickly.

The effects that can be obtained from the present disclosure are not limited to those described above, and any other effects not mentioned herein will be clearly understood by those having ordinary knowledge in the art to which the present disclosure belongs, from the following description.

In embodiments, an electronic device 101 is provided. The electronic device 101 may comprise at least one processor 120 comprising processing circuitry and, memory storing instructions, and, the instructions, when executed by the at least one processor 120 individually or collectively, may cause the electronic device 101 to generate first text data for first voice data 601, generate second text data corresponding to the first text data, through translation from a first language of the first text data to a second language 603, determine 605 a voice output speed for the second text data based on amount of text data waiting for text-to-speech conversion, generate 607 second voice data for the second text data by performing the text-to-speech conversion based on the voice output speed, and output 609 the second voice data.

For example, the instructions, when executed by the at least one processor 120 individually or collectively, may cause the electronic device 101 to determine amount of text data waiting for the text-to-speech conversion in a buffer for the text-to-speech conversion, in response to outputting previous voice data, determine the voice output speed corresponding to the amount of text data, and control a text-to-speech (TTS) module (or a function code, a device, a circuit, or a set of instructions) to generate the second voice data based on the voice output speed.

For example, the instructions, when executed by the at least one processor 120 individually or collectively, may cause the electronic device 101 to generate signals including the second voice data to output the second voice data by an electronic device 101 connected to the electronic device 101, and transmit the generated signals to the external electronic device 101.

For example, the instructions, when executed by the at least one processor individually or collectively, may cause the electronic device to obtain a sequence of synthesis units for forming sound based on analyzing the second text data, and generate prosody information for each synthesis unit of the sequence based on the voice output speed, and output a synthesis sound corresponding to the synthesis units based on the prosody information, as the second voice data.

For example, each of the synthesis units may correspond to a phoneme, a syllable, or a word. The prosody information may indicate a duration of a corresponding synthesis unit.

For example, the electronic device 101 may include a speaker. The instructions, when executed by the at least one processor 120 individually or collectively, may cause the electronic device 101 to output the second voice data through the speaker.

For example, the amount of text data waiting for the text-to-speech conversion may correspond to the number of text data stored for the text-to-speech conversion in a buffer configured for the text-to-speech conversion in a designated application.

For example, the amount of text data waiting for the text-to-speech conversion may correspond to the number of characters of the text data waiting for the text-to-speech conversion.

For example, the instructions, when executed by the at least one processor individually or collectively, may cause the electronic device to obtain voice signals in response to executing a designated application, obtain the first text data for the first voice data from the voice signals, through an automatic speech recognition (ASR) module (or a function code, a device, a circuit, or a set of instructions) while the designated application is executed. The second voice data may be output while the designated application is executed.

For example, the instructions, when executed by the at least one processor individually or collectively, may cause the electronic device to determine whether a difference between a first value, which is a voice output speed of voice data output previously, and the second value, which is the determined voice output speed, is greater than or equal to a threshold value, in accordance with a determination that the difference between the first value and the second value is greater than or equal to the threshold value, generate the second voice data for the second text data based on a third value between the first value and the second value, in accordance with a determination that the difference between the first value and the second value is smaller the threshold value, and generate the second voice data for the second text data based on the second value.

For example, the instructions, when executed by the at least one processor individually or collectively, may cause the electronic device to generate a first voice segment corresponding to a first portion of the second text data in accordance with a third value between a first value, which is a voice output speed of voice data output previously, and a second value, which is the determined voice output speed, and generate a second voice segment corresponding to a second portion of the second text data in accordance with the second value, which is the determined voice output speed. The second voice data may include the first voice segment and the second voice segment.

For example, the voice output speed for the second text data may be determined based on at least one of whether voice data according to the first language is being input for speech-to-text conversion, whether text data according to the first language is being input for the translation, or the number of inputs of text data according to the first language waiting for the translation.

For example, the speech-to-text conversion from the first voice data to the first text data may be performed through the automatic speech recognition (ASR) module (or the function code, the device, the circuit, or the set of instructions) of the electronic device 101. The translation from the first language of the first text data to the second language may be performed through a translation function. The text-to-speech conversion from the second text data to the second voice data may be performed through a text-to-speech (TTS) module of the electronic device. A buffer for the text-to-speech conversion may correspond to a first input first output (FIFO) type. The buffer for the text-to-speech conversion may use text data output from the translation module as input, and the text data input into the buffer may be provided to the TTS module after output of voice data from the TTS function.

For example, the instructions, when executed by the at least one processor individually or collectively, may cause the electronic device to generate a first voice segment corresponding to first sentence data among a plurality of sentence data of the second text data according to a first value, and generate a second voice segment corresponding to second sentence data among the plurality of sentence data of the second text data according to a second value different from the first value. The second voice data may include the first voice segment and the second voice segment.

For example, the electronic device 101 may comprise a display. The instructions, when executed by the at least one processor individually or collectively, may cause the electronic device to display, through the display, the first text data and the second text data while outputting the second voice data, while a portion of the second voice data is output, display, through the display, an emphasis effect on a first text portion of the first text data corresponding to the portion, and display, through the display, an emphasis effect on a second text portion of the second text data corresponding to the portion.

For example, the electronic device 101 may include a display. The instructions, when executed by the at least one processor individually or collectively, may cause the electronic device to establish a call connection with an external electronic device 101 through a call application, display, through the display, a user interface for a translation while the call connection is in progress, display, through the display, the first text data for the first voice data from the external electronic device 101 on the user interface, and display, through the display, the second text data for the second voice data from the external electronic device on the user interface.

For example, the instructions, when executed by the at least one processor individually or collectively, may cause the electronic device to obtain voice signals according to the first language, and generate text data corresponding to each voice data with a designated unit from the voice signals through speech-to-text conversion. The text data may include the first text data. The designated unit may be a sentence unit.

In embodiments, a method performed by an electronic device is provided. The method may comprise generating 601 first text data for first voice data, generating 603 second text data corresponding to the first text data, through a translation from a first language of the first text data to a second language, determining 605 a voice output speed for the second text data based on amount of text data waiting for text-to-speech conversion, generating 607 second voice data for the second text data by performing the text-to-speech conversion based on the voice output speed, and outputting 609 the second voice data.

For example, generating of the second voice data may comprise determining amount of text data waiting for the text-to-speech conversion in a buffer for the text-to-speech conversion, in response to outputting previous voice data, determining the voice output speed corresponding to the amount of text data, and controlling a text-to-speech (TTS) module (or a function code, a device, a circuit, or a set of instructions) to generate the second voice data based on the voice output speed.

For example, outputting of the second voice data may comprise generating signals including the second voice data to output the second voice data by an external electronic device 101 connected to the electronic device 101, and transmitting the generated signals to the external electronic device 101.

For example, the method may comprise obtaining voice signals in response to executing a designated application, obtaining the first text data for the first voice data from the voice signals, through automatic speech recognition (ASR) module while the designated application is executed. The second voice data may be output while the designated application is executed.

In embodiments, an electronic device 101 is provided. The electronic device 101 may comprise at least one processor 120 comprising processing circuitry, and memory storing instructions. The instructions, when executed by the at least one processor 120 individually or collectively, may cause the electronic device 101 to generate 601 first text data for first voice data, generate 603 second text data corresponding to the first text data, through a translation from a first language to a second language of the first text data, determine 605 a voice output speed for the second text data based on a speech time of the first voice data and a speech speed corresponding to a text length of the first text data, generate 607 second voice data for the second text data by performing the text-to-speech conversion based on the voice output speed, and, output 609 the second voice data.

In embodiments, a method performed by an electronic device 120 is provided. The electronic device 120 may comprise generating first text data for first voice data, generating second text data corresponding to the first text data, through a translation from a first language to a second language of the first text data, determining a voice output speed for the second text data based on a speech time of the first voice data and a speech speed corresponding to a text length of the first text data, generating second voice data for the second text data by performing the text-to-speech conversion based on the voice output speed, and outputting the second voice data.

In embodiments, a non-transitory computer-readable storage medium is provided. The non-transitory computer-readable storage medium may cause an electronic device 120 to generate first text data for first voice data, generate second text data corresponding to the first text data, through a translation from a first language of the first text data to a second language, determine a voice output speed for the second text data based on amount of text data waiting for text-to-speech conversion, generate second voice data for the second text data by performing the text-to-speech conversion based on the voice output speed, and output the second voice data.

In embodiments, a non-transitory computer-readable storage medium is provided. The non-transitory computer-readable storage medium may cause an electronic device 120 to generate first text data for first voice data, generate second text data corresponding to the first text data, through a translation from a first language of the first text data to a second language, determine a voice output speed for the second text data based on a speech time of the first voice data and a speech speed corresponding to a text length of the first text data, generate second voice data for the second text data by performing the text-to-speech conversion based on the voice output speed, and output the second voice data.

In an example, an electronic device is provided comprising: at least one processor comprising processing circuitry; memory storing instructions that, when executed by the at least one processor individually or collectively, cause the electronic device to: generate first text data based on first voice data; generate second text data corresponding to the first text data, through a translation from a first language of the first text data to a second language; determine a voice output speed for the second text data based on an amount of text data waiting for text-to-speech conversion; generate second voice data for the second text data by performing the text-to-speech conversion; and output the second voice data; wherein at least one of generating the second voice data by performing the text-to-speech conversion and outputting the second voice data is based on the determined voice output speed.

In an example, a method performed by an electronic device is provided, the method comprising: generating first text data based on first voice data; generating second text data corresponding to the first text data, through a translation from a first language of the first text data to a second language; determining a voice output speed for the second text data based on an amount of text data waiting for text-to-speech conversion; generating second voice data for the second text data by performing the text-to-speech conversion; and outputting the second voice data; wherein at least one of generating the second voice data by performing the text-to-speech conversion and outputting the second voice data is based on the determined voice output speed.

In an example, a non-transitory computer-readable storage medium is provided. The non-transitory computer-readable storage medium may cause an electronic device to generate first text data based on first voice data; generate second text data corresponding to the first text data, through a translation from a first language of the first text data to a second language; determine a voice output speed for the second text data based on an amount of text data waiting for text-to-speech conversion; generate second voice data for the second text data by performing the text-to-speech conversion; and output the second voice data; wherein at least one of generating the second voice data by performing the text-to-speech conversion and outputting the second voice data is based on the determined voice output speed.

For one or more embodiments, at least one of the components described in one or more of the preceding drawings can be configured to perform one or more of the operations, techniques, processes, and/or methods described in the present disclosure. For example, a processor (e.g., a baseband processor) described in the present disclosure with respect to one or more of the preceding drawings can be configured to operate according to one or more of the examples described in the present disclosure. For another example, circuitry associated with a user equipment (UE), a base station, a network element, as described above with respect to one or more of the preceding drawings can be configured to operate according to one or more of the examples described herein.

Any of the embodiments described above may be combined with any other embodiment (or combination of embodiments) unless explicitly stated otherwise. The foregoing description of one or more implementations provides examples and descriptions, but is not intended to be exhaustive or to limit the scope of the embodiments to the precise forms disclosed. Modifications and variations are possible in light of the above teachings or may be obtained from practicing various embodiments.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one processor comprising processing circuitry;
memory storing instructions that, when executed by the at least one processor individually or collectively, cause the electronic device to:
generate first text data based on first voice data;
generate second text data corresponding to the first text data, through a translation from a first language of the first text data to a second language;
determine a voice output speed for the second text data based on an amount of text data waiting for text-to-speech conversion;
generate second voice data for the second text data by performing the text-to-speech conversion based on the voice output speed; and
output the second voice data.

2. The electronic device of claim 1, wherein the instructions, when executed by the at least one processor individually or collectively, cause the electronic device to:
determine the amount of text data waiting for the text-to-speech conversion in a buffer for the text-to-speech conversion, in response to outputting previous voice data;
determine the voice output speed corresponding to the amount of text data waiting in the buffer; and
control a text-to-speech (TTS) function to generate the second voice data based on the voice output speed.

3. The electronic device of claim 1 or 2, wherein the instructions, when executed by the at least one processor individually or collectively, cause the electronic device to:
generate signals including the second voice data to output the second voice data by an external electronic device connected to the electronic device; and
transmit the generated signals to the external electronic device.

4. The electronic device of any preceding claim, wherein the instructions, when executed by the at least one processor individually or collectively, cause the electronic device to:
obtain a sequence of synthesis units for forming sound based on analyzing the second text data;
generate prosody information for each synthesis unit of the sequence based on the voice output speed; and
output a synthesis sound corresponding to the synthesis units based on the prosody information, as the second voice data.

5. The electronic device of claim 4,
wherein each of the synthesis units corresponds to a phoneme, a syllable, or a word, and wherein the prosody information indicates a duration of a corresponding synthesis unit.

6. The electronic device of any preceding claim,
wherein the amount of text data waiting for the text-to-speech conversion is determined based on the number of characters of the text data waiting for the text-to-speech conversion.

7. The electronic device of any preceding claim, wherein the instructions, when executed by the at least one processor individually or collectively, cause the electronic device to:
obtain voice signals in response to executing a designated application; and
obtain the first text data for the first voice data from the voice signals, through an automatic speech recognition (ASR) function while the designated application is executed, and
wherein the second voice data is output while the designated application is executed.

8. The electronic device of any preceding claim, wherein the instructions, when executed by the at least one processor individually or collectively, cause the electronic device to:
determine whether a difference between a first value, which is a voice output speed of voice data output previously, and a second value, which is the determined voice output speed, is greater than or equal to a threshold value,
in accordance with a determination that the difference between the first value and the second value is greater than or equal to the threshold value, generate the second voice data for the second text data based on a third value between the first value and the second value, and
in accordance with a determination that the difference between the first value and the second value is smaller the threshold value, generate the second voice data for the second text data based on the second value.

9. The electronic device of any preceding claim, wherein the instructions, when executed by the at least one processor individually or collectively, cause the electronic device to:
generate a first voice segment corresponding to a first portion of the second text data in accordance with a third value between a first value, which is a voice output speed of voice data output previously, and a second value, which is the determined voice output speed, and
generate a second voice segment corresponding to a second portion of the second text data in accordance with the second value, which is the determined voice output speed, and
wherein the second voice data includes the first voice segment and the second voice segment.

10. The electronic device of any preceding claim,
wherein the voice output speed for the second text data is further determined based on at least one of whether voice data according to the first language is currently being input for speech-to-text conversion, whether text data according to the first language is currently being input for a translation, the number of inputs of text data according to the first language waiting for the translation, a speech time of the first voice data, or a speech speed corresponding to a text length of the first text data.

11. The electronic device of any preceding claim,
wherein a speech-to-text conversion from the first voice data to the first text data is performed through an automatic speech recognition (ASR) function of the electronic device,
wherein the translation from the first language of the first text data to the second language is performed through a translation function,
wherein the text-to-speech conversion from the second text data to the second voice data is performed through a text-to-speech (TTS) function of the electronic device,
wherein a buffer for the text-to-speech conversion corresponds to a first input first output (FIFO) type, and
wherein the buffer for the text-to-speech conversion uses text data output from the translation function as input, and the text data input into the buffer is provided to the TTS function after outputting of voice data from the TTS function.

12. The electronic device of any preceding claim, wherein the instructions, when executed by the at least one processor individually or collectively, cause the electronic device to:
generate a first voice segment corresponding to first sentence data among a plurality of sentence data of the second text data according to a first value, and
generate a second voice segment corresponding to second sentence data among the plurality of sentence data of the second text data according to a second value different from the first value,
wherein the second voice data includes the first voice segment and the second voice segment.

13. The electronic device of any preceding claim, further comprising:
a display,
wherein the instructions, when executed by the at least one processor individually or collectively, cause the electronic device to:
display, through the display, the first text data and the second text data while outputting the second voice data,
while a portion of the second voice data is output:
display, through the display, an emphasis effect on a first text portion of the first text data corresponding to the portion, and
display, through the display, an emphasis effect on a second text portion of the second text data corresponding to the portion.

14. The electronic device of any preceding claim, further comprising:
a display,
wherein the instructions, when executed by the at least one processor individually or collectively, cause the electronic device to:
establish a call connection with an external electronic device through a call application, display, through the display, a user interface for a translation while the call connection is in progress;
display, through the display, the first text data based on the first voice data from the external electronic device on the user interface; and
display, through the display, the second text data on the user interface;
wherein outputting the second voice data comprises transmitting the second voice data to the external electronic device.

15. A method performed by an electronic device, the method comprising:
generating first text data based on first voice data;
generating second text data corresponding to the first text data, through a translation from a first language of the first text data to a second language;
determining a voice output speed for the second text data based on an amount of text data waiting for text-to-speech conversion;
generating second voice data for the second text data by performing the text-to-speech conversion based on the voice output speed; and
outputting the second voice data.
